# EUROPÄISCHE PATENTSCHRIFT

(11) **EP 1 315 916 B1**
(45) Veröffentlichungstag und Bekanntmachung des Hinweises auf die Patenterteilung: **22.11.2006**
(21) Anmeldenummer: 01978333.1
(22) Anmeldetag: 04.09.2001
(51) Int. Cl.: F16D 33/16, F16H 61/64, F16H 61/14

(54) **VERFAHREN UND VORRICHTUNG ZUR STEUERUNG EINER HYDRODYNAMISCHEN KUPPLUNG**
METHOD AND DEVICE FOR CONTROLLING A HYDRODYNAMIC CLUTCH
PROCEDE ET DISPOSITIF POUR PILOTER UN EMBRAYAGE HYDRODYNAMIQUE

(30) Priorität: 04.09.2000 DE 10043713
(43) Veröffentlichungstag der Anmeldung: 04.06.2003
(73) Patentinhaber: Voith Turbo GmbH & Co. KG, 89522 Heidenheim (DE)
(72) Erfinder: NITSCHE, Martin, 89547 Gerstetten (DE); BECKE, Martin, 89075 Ulm (DE)
(74) Vertreter: Dr. Weitzel & Partner
(86) Internationale Anmeldenummer: PCT/EP2001/010136
(87) Internationale Veröffentlichungsnummer: WO 2002/025129

(56) Entgegenhaltungen:
- WO-A-00/53478
- WO-A-98/25053
- WO-A-98/25054
- DE-A- 3 430 456
- DE-B- 2 150 115
- US-A- 4 191 072

## Beschreibung

Die Erfindung betrifft ein Verfahren zur Steuerung einer hydrodynamischen Kupplung in einer Antriebseinheit, einem diesem zugeordnten Schmier- und Betriebsmittelversorgungssystem, umfassend eine Betriebsmittelquelle, eine Kühleinrichtung und eine Speichereinrichtung, mit den Merkmalen aus dem Oberbegriff des Anspruches 1, ferner eine Steuervorrichtung.

Hydrodyamische Kupplungen sind für eine Vielzahl von Einsatzmöglichkeiten bekannt. Unter anderem finden derartige hydrodynamische Baueinheiten als hydrodynamische Kupplungen und hydrodynamische Bremsen Verwendung Betreffend die Möglichkeiten der konstruktiven Ausgestaltung von hydrodynamischen Maschinen als hydrodynamische Kupplungs- oder Bremseinrichtungen wird auf "Voith, Hydrodynamische Getriebe, Kupplungen, Bremsen, Otto Krausskopf Verlag GmbH, Mainz, 1970" verwiesen, wobei der Offenbarungsgehalt dieser Schrift diesbezüglich vollumfänglich in denjenigen der vorliegenden Anmeldung miteinbezogen wird.

Hydrodynamische Kupplungen sind beispielsweise aus "VDI Handbuch Getriebetechnik II": VDI-Richtlinien VDI 2153, Hydrodynamische Leistungsübertragung Begriffe - Bauformen - Wirkungsweisen bekannt, deren Offenbarungsgehalt bezüglich der Gestaltung dieser Baueinheiten vollumfänglich in die vorliegende Anmeldung miteinbezogen wird. Kupplungen werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. In Antriebssträngen wird im allgemeinen einer Mehrzahl von Komponenten ein gemeinsam nutzbares Schmier- und Betriebsmittelversorgungsystem zugeordnet. Zur optimalen Erfüllung der an die Einzelelemente im Antriebssystem gestellten Forderungen sind den Einzelelementen in der Regel Steuereinrichtungen zugeordnet, welche eine entsprechende Versorgung mit Betriebs- bzw. Schmiermittel gewährleisten. Der steuer- und regelungstechnische Aufwand ist sehr hoch.

Aus der Druckschrift US-A-4 191 072 ist eine Retardersteuerung sowie die Steuerung der Betätigung eines hydrodynamischen Drehzahl-/Drehmomentwandlers vorbekannt. Das aus dem Arbeitsraum austretende Betriebsmedium wird dem Schmiermittelsystem zugeführt. Dies bedeutet, es erfolgt immer eine der hydrodynamischen Komponente nachgeordnete Schmiermittelversorgung, wobei als Schmiermittel im einzelnen Betriebsmittel aus der hydrodynamischen Komponente verwendet wird und nur bei Betrieb der hydrodynamischen Kupplung tatsächlich Schmiermittel dem Schmiermittelsystem zugeführt wird. Damit ist eine Schmierung anderer Komponenten außerhalb des Betriebes des hydrodynamischen Drehzahl-/Drehmomentwandlers nicht gegeben.

Der Erfindung liegt daher die Aufgabe zugrunde eine Verfahren zur Steuerung einer hydrodynamischen Kupplung, ferner eine Vorrichtung zur Steuerung einer hydrodynamischen Kupplung dahingehend zu entwickeln, daß mit möglichst geringem konstruktiven und steuerungstechnischen Aufwand immer eine sichere und zuverlässige Betriebsweise der einzelnen Komponenten, insbesondere der hydrodynamischen Kupplung gewährleistet wird. Die einzelnen möglichen Funktionen sollen dabei auf einfache Art und Weise einstellbar sein.

Die erfindungsgemäße Lösung der Aufgabe ist durch die Merkmale der Ansprüche 1 und 7 charakterisiert. Vorteilhafte Ausgestaltungen sind in den Unteransprüchen wiedergegeben.

Erfindungsgemäß ist vorgesehen, daß in einem Antriebssystem mit wenigstens einer hydrodynamischen Kupplung, umfassend wenigstens zwei Schaufelräder, die miteinander einen torusförmigen Arbeitsraum bilden, welchem wenigstens eine Zulaufleitung und eine Ablaufleitung zugeordnet ist, und dem ein Schmier- bzw. Betriebsmittelversorgungssystem zugeordnet ist, eine Sollgröße für eine, den Funktionszustand der hydrodynamischen Kupplung wenigstens mittelbar charakterisierende Größe als Eingangsgröße der dem Schmiermittel- bzw. Betriebsmittelversorgungssystem zugeordneten Steuereinrichtung zur Ansteuerung einer Stelleinrichtung zur Beeinflussung der Betriebsmittelversorgung der hydrodynamischen Kupplung derart vorgebbar ist, daß wenigstens drei Grundfunktionszustände der hydrodynamischen Kupplung einstellbar sind. Diese sind Entleeren, Füllen und je nach Art des hydrodynamischen Elementes Steuerung des übertragbaren Momentes.

Über die Stelleinrichtung zur Beeinflussung der Betriebsmittelversorgung der hydrodynamischen Kupplung sind wenigstens drei Grundfunktionszustände für die hydrodynamische Kupplung einstellbar, wobei in einem ersten Grundfunktionszsutand die hydrodynamische Kupplung deaktiviert ist, insbesondere entleert vorliegt, während in einem zweiten Grundfunktionszustand dem Arbeitsraum der hydrodynamischen Kupplung Betriebsmittel über eine Betriebsmittelquelle zugeführt wird und in einem geschlossenen Kreislauf ein Teil des Betriebsmittels aus dem Arbeitsraum über eine Kühleinrichtung dem Arbeitsraum wieder zugeführt wird und in einem dritten Grundfunktionszustand, welcher auch als Regelzustand bezeichnet wird, ein Teil des Betriebsmittels aus dem Arbeitsraum über die Kühleinrichtung dem Arbeitsraum wieder zugeführt wird und ein Leckageausgleich durch Kopplung mit der Betriebsmittelversorgungsquelle vorgesehen wird, wobei in diesem Zustand das übertragbare Moment durch Füllungsgradänderung variiert werden kann.

Gemäß einer besonders vorteilhaften Ausführung wird das erfindungsgemäße Verfahren für ein hydrodynamisches Bauelement in Form einer hydrodynamischen Kupplung in einer Anfahreinheit mit einer dieser zugeordneten Überbrückungskupplung eingesetzt. Die Anfahreinheit umfaßt ein Schmiermittel- und/oder Betriebs- und/oder Steuermittelversorgungssystem und optional einen Speichereinrichtung, welches gemeinsam von einer hydrodynamischen Kupplung und Überbrückungskupplung genutzt wird. Dabei ist in einem Grundfunktionszustand zusätzlich eine Versorgung des Schmiermittelsystems der Anfahreinheit einstellbar, wobei die Stellgröße zur Betätigung der Stelleinrichtung aus dem Sollwert der den Funktionszustand der hydrodynamischen Kupplung wenigstens mittelbar charakterisierende Größe in Abhängigkeit einer den Druck in der Ablaufleitung der hydrodynamischen Kupplung wenigstens mittelbar charakterisierenden Größe erzeugt wird. Über die Stelleinrichtung zur Beeinflussung der Betriebsmittelversorgung der hydrodynamischen Kupplung sind wenigstens die drei nachfolgend genannten Grundfunktionszustände für die hydrodynamischen Kupplung einstellbar, wobei
a) in einem ersten Grundfunktionszustand der hydrodynamischen Kupplung, insbesondere Entleerung bzw. entleertes Element Betriebsmittel von einer Betriebsmittelquelle über die Kühleinrichtung dem Schmiermittelanschluß der Anfahreinheit zugeführt wird;
b) in einem zweiten Grundfunktionszustand dem Arbeitsraum der hydrodynamischen Kupplung Betriebsmittel von einem Speicher und der Betriebsmittelquelle zugeführt wird und in einem geschlossenen Kreislauf ein Teil des Betriebsmittels aus dem Arbeitsraum über die Kühleinrichtung dem Arbeitsraum wieder zu geführt wird und
c) in einem dritten Grundfunktionszustand, welcher auch als Regelzustand bezeichnet wird, ein Teil des Betriebsmittels aus dem Arbeitsraum über die Kühleinrichtung dem Arbeitsraum wieder zugeführt wird und ein Leckageausgleich durch Koppelung mit der Betriebsmittelversorgungsquelle vorgesehen wird.

Dabei werden im dritten Grundfunktionszustand vorzugsweise wenigstens zwei Grenzzustände unterschieden - ein erster Grenzzustand für hohe Betriebsdrücke und ein zweiter Grenzzustand für niedrige Drücke. Die Änderung des Druckes über den möglichen Steuerbereich erfolgt entweder stufenweise oder stufenlos.

Die Begriffe "Zulaufleitung" und "Ablaufleitung" sind im vorrichtungstechnischen Sinn nicht zwingend als Leitungen zu verstehen, sondern können auch in Form von Kanälen oder anders ausgebildeten Führungen für das Betriebsmittel vorliegen.

Die Verstellung zwichen den einzelnen Grundfunktionszuständen erfolgt im einfachsten Fall in einer Vielzahl von Stufen, vorzugsweise jedoch ebenfalls stufenlos.

Unter Schmiermittelversorgungssystemen werden die Einrichtungen zusammengefaßt, welche der Schmierung von Einzelkomponenten der Anfahreinheit, beispielsweise der Lager, dienen.

Die eventuell vorgesehene Steuermittelversorgung betrifft die Bereitstellung der erforderlichen Betätigungskräfte für die Überbrückungskupplung auf hydraulische Art.

Das erfindungsgemäße Verfahren ermöglicht es, daß mit einem gemeinsam von hydrodynamischer Kupplung und Gesamt-Anfahreinheit genutzten Betriebsmittel- bzw. Schmiermittelversorgungssystem mit geringem konstruktiven und vorallem steuerungstechnischen Aufwand immer eine sichere und zuverlässige Betriebsweise der einzelnen Komponenten, insbesondere der hydrodynamischen Kupplung gewährleistet wird, da immer eine, den Druck in der Ablaufleitung der hydrodynamischen Kupplung wenigstens mittelbar charakterisierende Größe, vorzugsweise direkt der Druck, Berücksichtigung findet.

In einer Weiterentwicklung des erfindungsgemäßen Verfahrens werden zusätzliche Maßnahmen ergriffen, um eine sichere Betriebsweise des gesamten Antriebssystems zu gewährleisten. So sind z.B. weitere Ventileinrichtungen vorgesehen, um einzelne Teilaufgaben vorrangig bzw. in einer bestimmten Wertigkeit zu lösen. Dazu gehören beispielsweise
a) die vorrangige Bereitstellung des Hauptdruckes der hydrodynamischen Kupplung;
b) die ganzzeitige Schmiermittelversorgung der Anfahreinheit, beispielsweise druckabhängig oder durch die Realisierung einer Mengenregelung.

Bei der hydrodynamischen Baueinheit handelt es sich vorzugsweise um eine hydrodynamische Kupplung, umfassend ein Pumpen- und ein Turbinenrad. Der Einsatz bei hydrodynamischen Wandlern wäre ebenfalls denkbar. Einen weiteren Anwendungsfall stellt eine hydrodynamisches Kupplung dar, mit welcher wahlweise sowohl die Funktion der Erzeugung eines Bremsmomentes als auch die Übertragung hoher Drehmomente realisiert werden kann, wie beispielsweise in den Druckschriften PCT/EP97/06623 und PCT/EP97/06646 beschrieben. Der Offenbarungsgehalt dieser Druckschriften bezüglich der konstruktiven Ausgestaltung, Betriebsweise und Ansteuerung einer derartig betreibbaren hydrodynamischen Kupplung wird hiermit vollumfänglich in den Offenbarungsgehalt dieser Anmeldung mit einbezogen.

Die hydrodynamische Kupplung umfaßt wenigstens zwei Schaufelräder, welche wenigstens einen torusförmigen Arbeitsraum miteinander bilden. Es besteht theoretisch auch die Möglichkeit, das erfindungsgemäße Verfahren für Ausführungen hydrodynamischer Baueinheiten mit mehreren Arbeitsräumen, beispielsweise Doppelkupplungen, anzuwenden.

Vorrichtungsmäßig werden diese Aufgaben mittels einer Steuereinrichtung realisiert, welche einem Schmier- und Betriebsmittelversorgungssystem der hydrodynamischen Kupplung zugeordnet ist. Bei Einsatz der hydrodynamischen Kupplung in einer Anfahreinheit ist die Steuereinrichtung vorzugsweise dem gemeinsam von hydrodynamischen Bauelement und Überbrückungskupplung genutzten Schmier- bzw.

Betriebsmittelversorgungssystem zugeordnet. Die Verwendung einer einzigen bzw. gemeinsam nutzbaren Steuereinrichtung bietet den Vorteil einer zentralen Anordnung zur Versorgung mehrere Systeme. Eine besonders vorteilhafte Ausgestaltung der Steuereinrichtung ist in Anspruch 6 beschrieben. Vorzugsweise umfaßt diese eine Druckwaage, d.h. das Funktionsprinzip beruht dabei auf der Kompensation der auf einen Kolben bekannter Querschnittsfläche oder die Sperrflüssigkeit in einem Ringrohr wirkenden Druckkraft durch eine Gegenkraft, wobei durch Verschiebung beispielsweise des Kolbens ein Kräftegleichgewicht eingestellt wird. Als Druckkraft und Gegenkraft fungieren dabei eine, der Sollwertvorgabe für einen gewünschten Funktionszustand der hydrodynamischen Kupplung entsprechende Druckkraft, welche durch die Größe der Angriffsfläche in der Druckwaage und einem, beispielsweise mittels eines Proportionalventiles erzeugten Druckes beschreibbar ist, und eine Kraft, welche aus dem Druck in der Ablaufleitung der hydrodynamischen Kupplung und der diesem zugeordneten Angriffsfläche in der Druckwaage charakterisiert ist.

Die Steuereinrichtung weist dazu ein Gehäuse auf, in welches wenigstens eine Steuerbohrung eingearbeitet ist. Die Steuerbohrung weist über ihre axiale Erstreckung betrachtet vorzugsweise unterschiedliche Durchmesser auf. Diese bilden einzelne Steuerkammern, welche mit Anschlüssen koppelbar sind. Denkbar sind jedoch auch Ausführungen mit eckigen Kammern. In der Steuerbohrung ist wenigstens ein Steuerkolben angeordnet, welcher in axialer Richtung verschiebbar ist und der über seine axiale Erstreckung vorzugsweise ebenfalls unterschiedliche Durchmesser aufweist. Die einzelnen Teilbereiche unterschiedlichen Durchmessers bzw. bei eckiger Gestaltung der unterschiedlichen Abmessungen am Steuerkolben und der Steuerbohrung bilden die sogenannten Steuerkanten.

Die Bereiche unterschiedlichen Außendurchmessers bzw. der unterschiedlichen Außenabmessungen des Steuerkolbens können dabei alternierend abwechselnd angeordnet sein. Vorzugsweise ist der Steuerkolben derart ausgeführt, daß dieser über die axiale Länge betrachtet lediglich zwei unterschiedliche Durchmesser aufweist, einen ersten Durchmesser, welcher kleiner dem Durchmesser der Steuerbohrung ausgeführt ist, und einen zweiten Durchmesser, welcher im wesentlichen dem Durchmesser der Steuerbohrung unter Berücksichtigung der erforderlichen Toleranzen entspricht. Entsprechend der Stellung des Steuerkolbens, insbesondere der Steuerkanten in der Steuerbohrung, werden die einzelnen Anschlüsse wenigstens teilweise oder ganz freigegeben oder verdeckt, wodurch die einzelnen Funktionszustände der hydrodynamischen Kupplung und beim Einsatz in Anfahreinheiten eventuell zusätzlich die Funktion der Versorgung des Schmiermittelsystems der Anfahreinheit realisiert werden. Als einzelne Anschlußmöglichen sind dabei wenigstens die folgenden vorzusehen:
- Anschluß 1 -: Betriebsmittelversorgungsquelle und Kühleinrichtung
- Anschluß 2 -: Speicher
- Anschluß 3 -: Zulaufleitung der hydrodynamischen Kupplung
- Anschluß 4 -: Ablaufleitung der hydrodynamischen Kupplung
- Anschluß 5 -: Kühleinrichtung
- Anschluß 6 -: Schmiermittelleitung für Anfahreinheit

Nachfolgend wird die Ausführung für den Einsatz in Anfahreinheiten beschrieben.

Die Eingangsgröße ist eine Sollgröße für eine, den Funktionszustand der hydrodynamischen Kupplung wenigstens mittelbar charakterisierende Größe. Diese ist vorgebbar, beispielsweise in Form eines Signales für eine Inbetriebnahme des als hydrodynamische Kupplung ausgeführten Bauelementes. Aus dieser wird eine Stellgröße zur Beaufschlagung einer alleinrichtung zur Beeinflussung der Betriebsmittelversorgung der drodynamischen Kupplung gebildet. Bei Ausführung der Steuereinrichtung als Druckwaage fungiert der Steuerkolben als Stelleinrichtung. Die Stellgröße ist die auf den Steuerkolben wirkende Kraft. Die andere Eingangsgröße wird vom Druck in der Ablaufleitung der hydrodynamischen Kupplung gebildet oder dem Druck an einem Auslaß aus dem Arbeitsraum.

Die Druckwaage stellt eine einfache kostengünstige und kompakte Steuereinrichtung dar. Zur Schaffung einer universellen Baueinheit werden vorzugsweise weitere Ventileinrichtungen zur Erfüllung unterschiedlicher Funktionen, beispielseise einer Mengenregelung zur Schmiermittelversorgung unabhängig von den im System vorhandenen Drücken, in der Steuereinrichtung integriert Die Ventileinrichtungen sind dabei vorzugsweise zu Baueinheiten zusammengefaßt, welche in der Steuerbohrung der Druckwaage angeordnet werden können, womit eine besonders kompakte Steuervorrichtung geschaffen wird.

Bei Anwendung des Verfahrens nur für eine hydrodynamisches Kupplung zur Steuerung der Betriebsmittelversorgung aus einem nur diesen zugeordneten Betriebsmittelversorgungssystem weist die Druckwaage wenigstens die Anschlüsse zur Betriebsmittelversorgungsquelle und Kühleinrichtung, einen Anschluß für die Zulaufleitung und ein für die Ablaufleitung der hydrodynamischen Kupplung auf. Der Steuerkolben der Druckwaage wird auch hier von einer Kraft beaufschlagt, welche aus einer, den gewünschten Sollzustand der hydrodynamischen Kupplung wenigstens mittelbar charakterisierenden Größe gebildet wird und des weiteren einer, dieser entgegengerichteten Kraft, welche aus dem Druck in der Ablaufleitung gebildet wird. Damit ist immer eine Rückkopplung zwischen gewünschtem Sollzustand und tatsächlich eingestelltem Zustand gegeben.

Die erfindungsgemäße Lösung ist nachfolgend anhand von Figuren erläutert. Es zeigen:
- Fig. 1a-1d: einen Ausschnitt aus einem Schmiermittel- bzw. Betriebsmittelversorgungssystem mit erfindungsgemäßer Steuerung einer hydrodynamischen Kupplung;
- Fig. 2a-2b: allgemein ein Blockschaltbild der erfindungsgemäßen Steuerung;
- Fig. 2c: ein Blockschaltbild der erfindungsgemäßen Steuerung für eine hydrodynamische Kupplung mit eigenem Betriebsmittelversorgungssystem;
- Fig. 3: eine Ausführung einer erfindungsgemäß gestalteten Steuervorrichtung in Form einer Druckwaage;
- Fig. 4: die Stellungen des Steuerkolbens der Druckwaage gemäß Fig. 3 in den in den Fig. 1a-1d beschriebenen Funktionszuständen der hydrodynamischen Kupplung;
- Fig. 5: eine Ausführung eines Schmiermittel- bzw. Betriebsmittelversorgungsystems mit Mengenregeleinrichtung;
- Fig. 6a- 6b: verdeutlichen anhand jeweils eines Ausschnittes aus einer Druckwaage mit unterschiedlicher Gestaltung des Steuerkolbens die Anordnung der zur Realisierung einer ganzzeitigen Schmiermittelversorgung erforderlichen Ventileinrichtungen;
- Fig. 7a- 7b: verdeutlichen jeweils anhand eines Ausschnittes aus unterschiedlich gestalteten Druckwaagen die Anordnung der in den Verbindungsleitungen zwischen Speicher und Druckwaage bzw. Speicher und Schmiermittelversorgungsleitung integrierten Ventileinrichtungen;
- Figur 8: verdeutlicht anhand eines Steuerschemas wie in Figur 1a ein vereinfachtes Schmiermittel- bzw. Betriebsmittelversorgungssystem mit erfindungsgemäßer Steuerung einer hydrodynamischen Kupplung;
- Figuren 9a und 9b: verdeutlichen die einzelnen Funktionsstellungen der Druckwaage für eine Ausführung gemäß Figur 8.

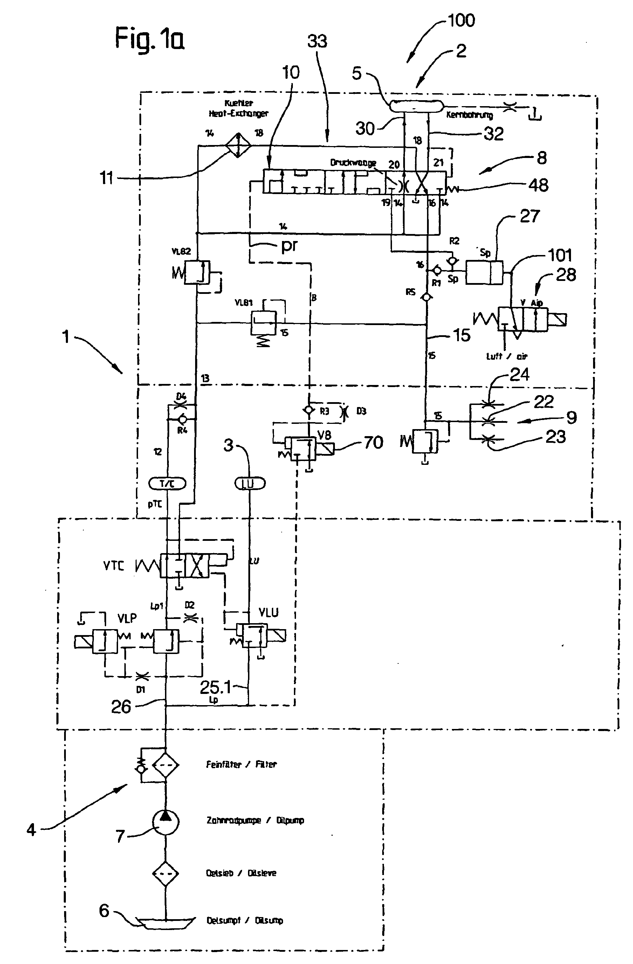

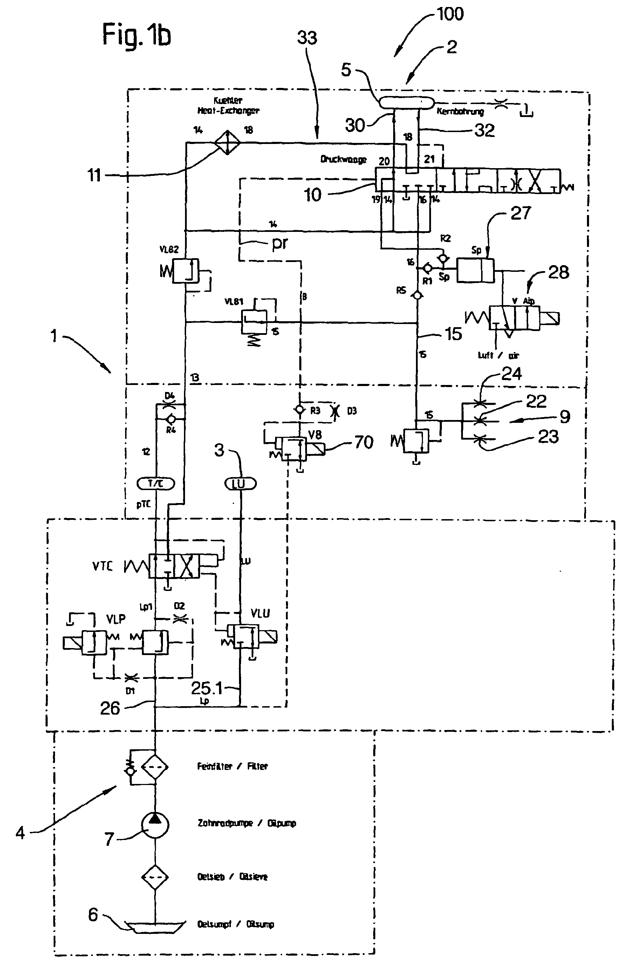

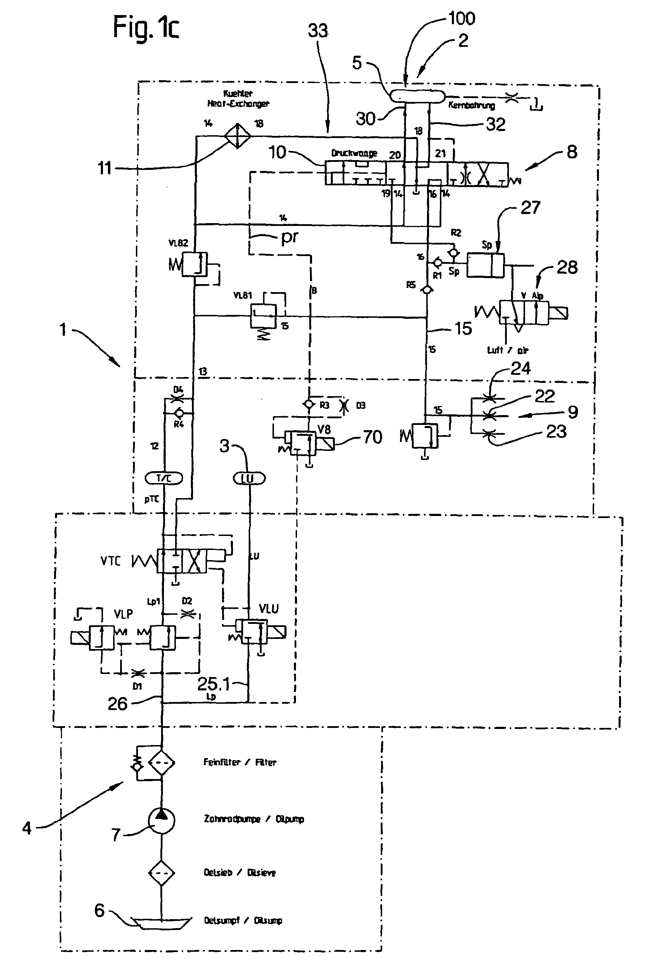

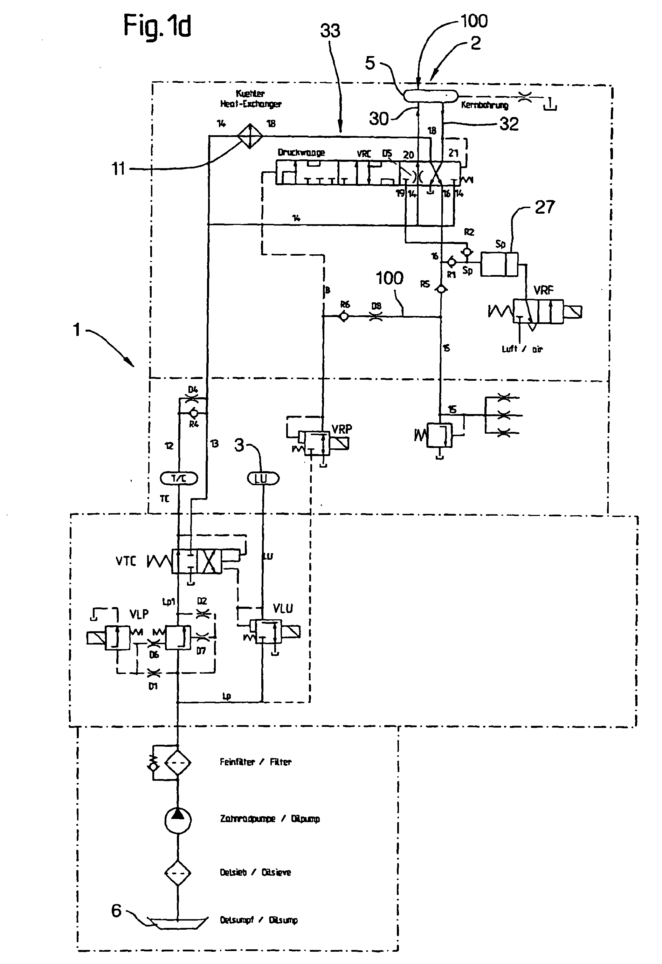

Die Figuren 1 a bis 1 d verdeutlichen in schematisch vereinfachter Darstellung anhand des Hydraulikplanes einen Ausschnitt aus einem Antriebssystem 1 mit einer Anfahreinheit 100, umfassend mindestens ein hydrodynamisches Bauelement 2, hier eine hydrodynamische Kupplung 5, eine Überbrückungskupplung 3 und ein Schmiermittel bzw. Betriebsmittelversorgungssystem 4. Die hydrodynamische umfaßt, hier im einzelnen nicht dargestellt, wenigstens ein Rotorschaufelrad und ein Statorschaufelrad, welche miteinander einen torusförmigen Arbeitsraum bilden. Ein Leitrad zur Änderung des Übertragungsverhaltens durch Dralländerung ist nicht vorgesehen, d.h. die Kupplung ist frei von einem Leitrad. Die Anfahreinheit mit hydrodynamischer Kupplung 5 kann vor oder im Getriebe angeordnet werden. Dier hydrodynamische Kupplung 5 befindet sich dann auf der Antriebsseite des Getriebes. Das Schmiermittel-bzw. Betriebsmittelversorgungssystem 4 umfaßt eine Betriebsmittelquelle 6, hier in Form eines Ölsumpfes, aus welchem mittels einer Pumpeinrichtung, hier der Zahnradpumpe 7 das Öl in die entsprechenden Leitungssysteme zur Versorgung der einzelnen Elemente - hydrodynamische Kupplung 5 und/oder Anfahreinheit 100 - erfolgt.

Der hydrodynamischen Kupplung 5 ist erfindungsgemäß eine Steuereinrichtung 8 zugeordnet, welche neben der Steuerung einer den Funktionszustand der hydrodynamischen Kupplung 5 wenigstens mittelbar charakterisierenden Größe, vorzugsweise des Füllungsgrades, verschiedene Versorgungsaufgaben, beispielsweise des Schmiermittelsystems 9 der Gesamt-Anfahreinheit 100 realisiert bzw. steuert. Die Steuereinrichtung 8 zur Steuerung einer den Funktionszustand der hydrodynamischen Kupplung 5 wenigstens mittelbar charakterisierenden Größe ist vorzugsweise als Druckwaage 10 ausgeführt. Das Funktionsprinzip beruht dabei auf der Kompensation der auf einen Kolben bekannter Querschnittsfläche oder die Sperrflüssigkeit in einem Ringrohr wirkenden Druckkraft durch eine Gegenkraft, wobei durch Verschiebung beispielsweise des Kolbens ein Kräftegleichgewicht eingestellt wird. Dazu ist eine Sollgröße für eine, den Funktionszustand der hydrodynamischen Kupplung wenigstens mittelbar charakterisierende Größe als Eingangsgröße einer, dem gemeinsam zugeordneten Schmiermittel- bzw. Betriebsmittelversorgungssystem 4 zugeordneten Steuereinrichtung 8 zur Ansteuerung einer Stelleinrichtung zur Beeinflussung der Betriebsmittelversorgung der hydrodynamischen Kupplung 5 und der Schmiermittelversorgung 9 der Gesamt-Anfahreinheit 100 vorgebbar. Die Stellgröße zur Betätigung der Stelleinrichtung wird dann aus dem Sollwert der den Funktionszustand der hydrodynamischen Kupplung wenigstens mittelbar charakterisierende Größe in Abhängigkeit einer den Druck in einer Ablaufleitung 32 der hydrodynamischen Kupplung 5 wenigstens mittelbar charakterisierenden Größe erzeugt.

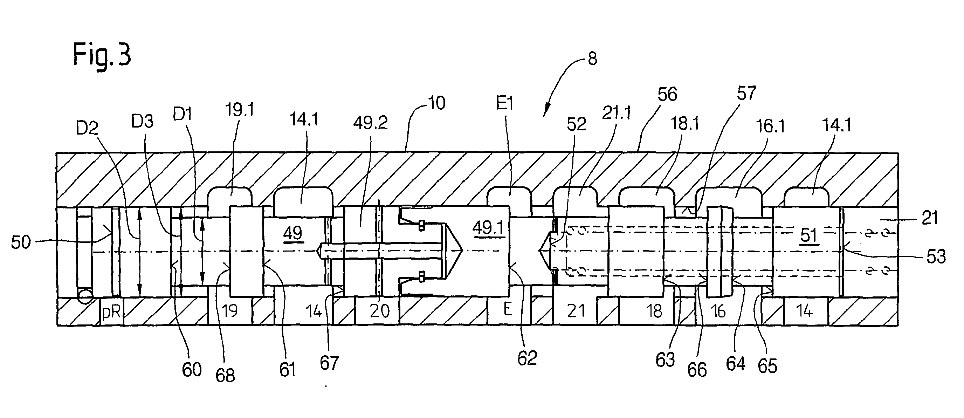

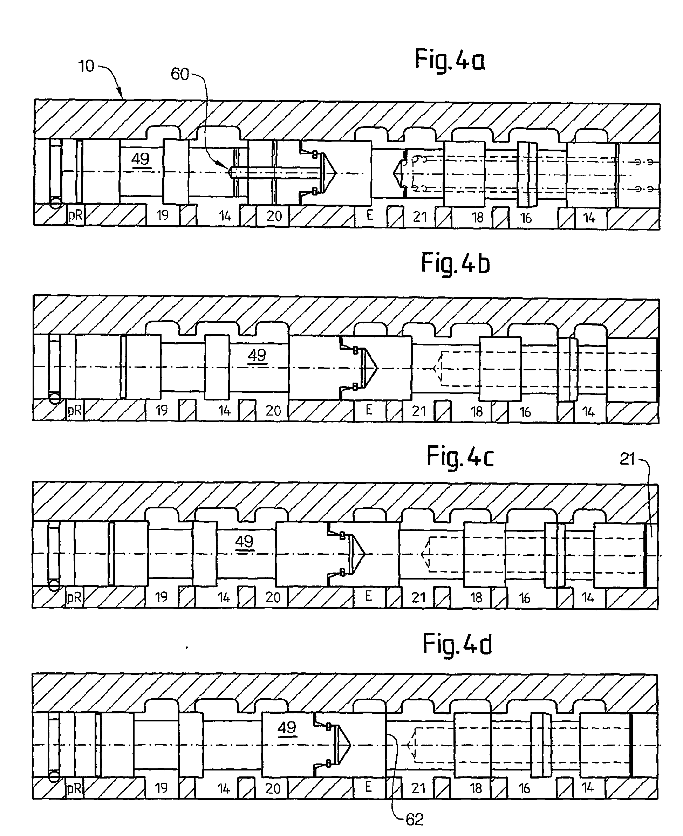

Über die Druckwaage 10 sind wenigstens drei, vorzugsweise vier Grundfunktionszustände der hydrodynamischen Kupplung 5 einstellbar, vorzugsweise erfolgt die Verstellung jedoch stufenlos. Bezüglich des Aufbaus der Druckwaage 10 wird auf die Figuren 3 und 4 verwiesen.

In einem ersten Funktionszustand der hydrodynamischen Kupplung 5 wird Betriebsmittel von der Betriebsmittelquelle 6 über eine Kühleinrichtung 11 in das Schmiermittelsystem 9 der Anfahreinheit 100 eingespeist. Dieser Funktionszustand ist in der Figur 1a dargestellt. Das Betriebsmittel, als welches vor allem Öl Verwendung findet, gelangt vom Ölsumpf 6 über die Leitung 13 in den sich daran anschließenden Leitungsabschnitt 14, die Kühleinrichtung 11 und die Leitung 18 in die Schmierleitung 15, welche mit den Schmiermittelanschlüssen des Schmiermittelversorgungssystems 9 der Anfahreinheit 100 gekoppelt ist. In diesem Funktionszustand ist die hydrodynamische Kupplung 5 vollständig entleert, es wird auch kein Betriebsmittel in den torusförmigen Arbeitsraum eingeführt. Der ausgeschaltete Zustand der hydrodynamischen Kupplung 5 entspricht dem ersten Funktionszustand. In diesem Zustand wird kein Drehmoment übertragen, und das Betriebsmittel wird lediglich zur Schmierung der einzelnen Elemente der Anfahreinheit 100 benötigt. In der Schmierleitung 15 ist vorzugsweise ein Rückschlagventil R5 angeordnet, welches verhindert, daß das Betriebsmittel aus der Schmierleitung 15 zurückströmt.

Das von der Anfahreinheit 100, d. h. von der hydrodynamischen Kupplung 5 und der Überbrückungskupplung 3 gemeinsam genutzte Schmiermittel-bzw. Betriebsmittelversorgungssystem versorgt auch die Überbrückungskupplung 3 mit dem erforderlichen Steuerdruck. Im dargestellten Fall in der Figur 1a ist die Versorgungsleitung 25 direkt an die Hauptversorgungsleitung 26 gekoppelt, welche die Pumpeinrichtung, hier die Zahnradpumpe 7, mit der Leitung 13 verbindet.

Der hydrodynamischen Kupplung 5 ist ein Speicher 27 zugeordnet. Der Speicher 27 ist vorzugsweise druckluftbetätigt. Zu diesem Zweck ist diesem ein Ventil 28 zugeordnet. Dieses Ventil wird nur kurz zum Zwecke des Befüllens des hydrodynamischen Bauelementes, insbesondere der hydrodynamischen Kupplung 5, eingeschaltet und wieder ausgeschaltet.

Der Zustand der Inbetriebnahme der hydrodynamischen Kupplung 5, die sogenannte Füllphase, kann durch die in der Figur 1 b mittels der Druckwaage 10 dargestellten bzw. realisierten Leitungsverbindungen beschrieben werden. Der Füllvorgang erfolgt dabei im wesentlichen über den Speicher 27, welcher über eine Leitung 19 mit dem Zulauf 30 mittels der Druckwaage 10 koppelbar ist. Dabei ist vorzugsweise in der Leitung 19 eine Ventileinrichtung in Form eines Rückschlagventils R2 vorgesehen, welches den Betriebsmittelrücklauf aus der hydrodynamischen Kupplung in den Speicher 27 für den Fall, daß der Füllwiderstand größer wird als der zur Verfügung stehende Einschiebedruck, welcher mittels der Ventileinrichtung 28 aufgebracht wird, verhindert. Die Koppelung zwischen Druckwaage und Speicher wird über eine Leitung 16 realisiert. Die Leitung 16 ist des weiteren mit der Schmierleitung 15 der Anfahreinheit 100 verbunden. Zur Verhinderung des Ausschiebens der Speichermenge in die Schmierleitung 15 und damit in das Schmiermittelsystem der Anfahreinheit 100 ist eine Ventileinrichtung, beispielsweise das Rückschlagventil R1, in der Verbindungsleitung zwischen Speicher und Leitung 16 vorgesehen. Zusätzlich zur Befüllung über den Speicher 27 erfolgt eine Versorgung mit Betriebsmittel über die Betriebsmittelquelle 6. Das Betriebsmittel gelangt über die Hauptleitung 26 in die Verbindungsleitung 13 zu der mit dem Kühler gekoppelten Leitung 14. Das Betriebsmittel gelangt dann über die Leitung 14, die Koppelung zwischen der Leitung 14 mit der Leitung 20, welche mit dem Zulauf 30 der hydrodynamischen Kupplung gekoppelt ist, in die hydrodynamische Kupplung 5. Zusätzlich wird in die mittels der Druckwaage 10. realisierten Verbindung zwischen der Leitung 14 und der Leitung 20 Betriebsmittel aus dem Speicher 27 eingespeist, indem die Leitung 19 ebenfalls mit der Leitung 20 gekoppelt ist. Infolge der sich einstellenden Druckdifferenzen in der hydrodynamischen Kupplung tritt Betriebsmittel über den Ablauf 32 in die Leitung 21 und wird durch die diesen Funktionszustand charakterisierende Stellung bzw. Stellungen der Druckwaage 10 in die Verbindungsleitung zum Kühler 11 eingespeist und über diesen der Leitung 14 zugeführt, um erneut in die hydrodynamische Kupplung 5 eingespeist zu werden. Es bildet sich somit bereits während der Füllphase ein geschlossener Kühlkreislauf zwischen dem Ablauf 32 der hydrodynamischen Kupplung 5 und dem Zulauf 30 aus. Dieser geschlossene Kreislauf kann auch als Kühlkreislauf bezeichnet werden und ist hier mit 33 gekennzeichnet. Der Kühlkreislauf 33 ist somit mit der Leitung 13 und damit der Zufuhrleitung von der Betriebsmittelquelle 6 zur hydrodynamischen Kupplung gekoppelt, wobei wie im vorliegenden Fall dargestellt, vorzugsweise gemeinsame Leitungen, hier ein Leitungsabschnitt der Leitung 14, genutzt werden. Der Betriebsmittelstrom zum Zwecke der Kühlung, d.h. der neben dem Arbeitskreislauf im Arbeitsraum der hydrodynamischen Kupplung sich einstellende Kühlkreislauf 33, ist durch einen Richtungswechsel der Betriebsmittelströmung gegenüber der Führung des Betriebs- bzw. Schmiermittels im ersten Funktionszustand der hydrodynamischen Kupplung charakterisiert.

Der Speicher 27 selbst weist bei Betätigung mittels Druckluft beispielsweise einen Speicherkolben 101 auf, der mit der Ventileinrichtung 28 gekoppelt ist und damit diesen auf einer Kolbenseite mit Druckluft beaufschlagt. Auf der anderen Seite des Speicherkolbens 101 befindet sich Betriebsmittel, welches in die Kupplung 5 eingeschoben wird. Trotz vorhandener Dichteinrichtung kann sich nach einiger Betriebszeit Betriebsmittel auf der druckluftbeaufschlagten Seite des Kolbens 101 ansammeln. Es besteht dann die Gefahr, daß dieses Betriebsmittel über die Entlüftung des Ventiles 28 ins Freie austritt. Zur Vermeidung dieses Zustandes kann das Lecköl durch gezieltes Ablassen entfernt werden. Die druckluftbeaufschlagte Kolbenseite bildet dann einen Ölraum, der eine bestimmte Menge an Leckageöl aufnimmt, wobei dieses beispielsweise über eine Entleeröffnung im Ölraum abgelassen werden kann. Eine andere Möglichkeit besteht in der selbsttätigen Abführung der angesammelten Betriebsmittelmenge. In diesem Fall wird dem Luftkanal zum Betätigen des Kolbens, d.h. der Koppelung zwischen Speicher 27 und Ventileinrichtung 28 eine Verbindungsleitung mit der Anfahreinheit 100 zugeordnet, wobei in dieser beispielsweise eine Kugelventileinrichtung angeordnet ist. Sobald das angesammelte Betriebsmittel das Niveau des Kugelventiles übersteigt, wird mit jeder Betätigung kurzzeitig Betriebsmittel von der Luftseite des Speichers 27 in die Anfahreinheit 100 geblasen. Dieser Effekt entsteht dabei durch Öffnung des Ventilsitzes durch die Kugel infolge der Schwerkraft bei ausgeschaltetem Pbeumatikventil 28. Bei eingeschaltetem Pneumatikventil 28 schließt der plötzliche Luftstrom den Ventilsitz. Zwischen den Funktionszuständen des Kugelventiles mit geöffnetem und geschlossenem Ventilsitz strömt kurzzeitig eine gewisse Betriebsmittelmenge von der druckluftbeaufschlagten Kolbenseite zur Anfahreinheitsseite. Diese Betriebsmittelmenge ist durch die Länge des Weges, Anschrägung des Ventilsitzes sowie die Auslegung der Strömungsquerschnitte bestimmt und muß dabei sicher über der maximnal anfallenden Leckagemenge liegen, um zu gewährleisten, daß kein Betriebsmittel über das Pneumatikventil 28 austritt.

Ein weiterer dritter Funktionszustand der hydrodynamischen Kupplung 5 kann durch die Stellung der Druckwaage 10 und die dadurch realisierten Verbindungen zwischen den einzelnen Leitungen, wie in der Figur 1c dargestellt, beschrieben werden. Dieser Funktionszustand beschreibt den Regelzustand der hydrodynamischen Kupplung 5. Die Leitungen 14 und 20 sind miteinander gekoppelt und damit mit dem Zulauf 30 der hydrodynamischen Kupplung 5. Der Druck im Kanal 14 entspricht annähernd dem Zuflußwiderstand in der Leitung 20. Die Pumpeinrichtung in Form der Zahnradpumpe 7 fördert lediglich die Leckagemenge der hydrodynamischen Kupplung nach. Überschüssiges Betriebsmittel, welches von der Pumpeinrichtung, insbesondere der Zahnradpumpe 7, gefördert wurde, gelangt von der Leitung 14 zum Leitungsabschnitt 16 und von diesem in die Schmiermittelleitung 15 zu den Schmiermittelanschlüssen 22 bis 24. Die Koppelung zwischen Zulauf der Kupplung 30 und Speicher 27 ist unterbrochen. Aufgrund der sich einstellenden Druckdifferenzen in der Kupplung 5 wird auch hier ein Kühlmittelkreislauf 33 erzeugt, wobei das Kühlmittel vom Ablauf 32 in die Verbindungsleitung 18 zur Kühleinrichtung 11 gelangt und nach Passieren der Kühleinrichtung 11 der Zufuhrleitung 14 zugeführt wird und in den Zulauf 30 der hydrodynamischen Kupplung eingespeist wird, wobei bei überschüssigem Betriebsmsittel ein Teil über die Leitung 16 in das Schmiermittelsystem 9 der Anfahreinheit 100 geleitet wird. Dieser dritte Funktionszustand kann noch einmal in einen weiteren vierten Funktionszustand unterteilt werden, welcher für die Einstellung von sehr geringen Drücken, d.h. der Erzeugung eines geringeren Übertragungsmomentes, erforderlich ist. In diesem Funktionszustand wird der Zulaufdruck unter das Niveau des Druckes in der Leitung 16 abgesenkt.

Bezüglich den einzelnen Stellungen des Steuerschiebers der Druckwaage 10 zur Realisierung der einzelnen Funktionszustände wird auf die noch zu beschreibenden Figuren 4a bis 4d verwiesen.

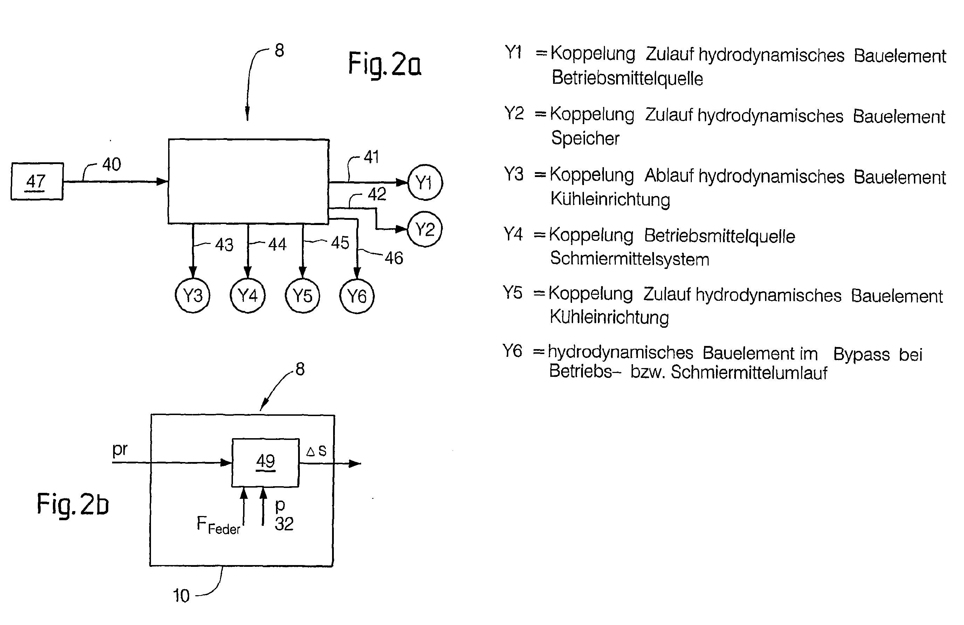

Die Funktion der Steuereinrichtung 8 gemäß den Figuren 1a bis 1d ist in Form eines Blockschaltbildes in Fig. 2a verdeutlicht. Demnach weist die Steuereinrichtung 8 wenigstens einen Eingang 40 auf und sechs Ausgänge 41 bis 46. Der Eingang 40 ist dabei mit einer Einrichtung 47 zur Vorgabe eines Sollwertes für eine den Funktionszustand der hydrodynamischen Kupplung wenigstens mittelbar charakterisierenden Größe koppelbar. Entsprechend der vorgegebenen Sollgröße bildet die Steuereinrichtung 8 Stellgrößen, hier die einzelnen Stellgrößen Y1 bis Y6, zur Einstellung des gewünschten Funktionszustandes. Bei der Bildung der Stellgrößen wird dabei dem Aspekt Rechnung getragen, daß das Betriebsmittel- bzw. Schmiermittelversorgungssystem nicht nur der hydrodynamischen Kupplung zugeordnet ist, sondern auch die Aufgabe hat, die Überbrückungskupplung und die anderen Elemente der Anfahreinheit entsprechend mit Schmiermittel bzw. mit entsprechendem Steuerdruck zu versorgen. Im einzelnen bedeutet dies, daß entsprechend der gebildeten Sollgrößen die entsprechenden Kopplungen zwischen Zulauf, Ablauf, Kühleinrichtung, Betriebsmittelquelle, Schmiermittelsystem und Speicher realisiert werden müssen. Dies kann beispielsweise über eine Vielzahl von Ventileinrichtungen erfolgen, welche in dem gemeinsam genutzten Leitungssystem entsprechend anzuordnen sind. Eine bevorzugte, besonders vorteilhafte Ausführung der Steuereinrichtung ist schematisch in vereinfachter Darstellung in den Figuren 1 a bis 1d wiedergegeben. Das Blockschaltbild für diese Einrichtung ist Figur 2b zu entnehmen. Als Eingangsgröße der Steuereinrichtung 8, welche als Druckwaage 10 ausgeführt ist, fungiert der sogenannte Steuerdruck pᵣ. Dieser wirkt auf die Kolbenfläche eines sogenannten Steuerkolbens, welcher als Übertragungsglied 49 fungiert. Weitere Eingangsgrößen sind die durch eine Energiespeichereinheit 48, welche beispielsweise in Form einer Federspeichereinrichtung ausgeführt ist, aufgebrachte Kraft F₄ und der im Ablauf 32 der hydrodynamischen Kupplung 5 herrschende Druck p₃₂. Aus diesen Eingangsgrößen wird als Ausgangsgröße eine Verschiebung des Steuerkolbens 49 und damit der Steuerkanten gegenüber den einzelnen Leitungsanschlüssen um einen Weg Δs realisiert. Die entsprechende Stellung des Steuerkolbens 49 bedingt dann durch die Koppelung einzelner Leitungsabschnitte bzw. Leitungen miteinander die Funktionszustände der hydrodynamischen Kupplung. Die konkrete konstruktive Ausführung der Druckwaage 10 ist anhand eines Beispiels in der Figur 3 beschrieben.

Die Figur 3 verdeutlicht eine Möglichkeit der konstruktiven Ausführung der erfindungsgemäß eingesetzten Druckwaage 10 als Steuereinrichtung 8 in einer Schnittdarstellung. Diese umfaßt ein Gehäuse 56, in welches wenigstens eine Steuerbohrung 57 eingearbeitet ist. Die Steuerbohrung 57 weist über ihre axiale Erstreckung betrachtet unterschiedliche Durchmesser auf. Diese bilden einzelne Steuerkammern, welche entsprechend den Anschlüssen mit 19.1, 14.1, 20e.1, 21.1, 18.1, 16.1 und 14.1 bezeichnet sind. In der Steuerbohrung 57 ist ein Steuerkolben 49 angeordnet, welcher in axialer Richtung verschiebbar ist und der über seine axiale Erstreckung unterschiedliche Durchmesser aufweist. Die einzelnen Teilbereiche unterschiedlichen Durchmessers bilden miteinander Steuerkanten. Die Steuerkanten sind hier mit 60, 61, 62, 63, 64, 65, 53, 67 und 68 bezeichnet.

Die Bereiche unterschiedlichen Außendurchmessers des Steuerkolbens 49 wechseln sich dabei alternierend ab. Vorzugsweise ist der Steuerkolben derart ausgeführt, daß dieser über die axiale Länge betrachtet lediglich zwei unterschiedliche Durchmesser aufweist, einen ersten Durchmesser D1, welcher kleiner dem Durchmesser D3 der Steuerbohrung ausgeführt ist. Der zweite Durchmesser D2 des Steuerkolbens 49 entspricht im wesentlichen dem Durchmesser D3 der Steuerbohrung 57 unter Berücksichtigung entsprechender Toleranzen, welche zur Realisierung einer axialen Verschiebbarkeit des Steuerkolbens 49 in der Steuerbohrung 57 erforderlich sind. Entsprechend der Stellung des Steuerkolbens 49, insbesondere der Steuerkanten in der Steuerbohrung 57, werden die einzelnen Anschlüsse wenigstens teilweise oder ganz freigegeben oder verdeckt, wodurch die einzelnen Funktionszustände der hydrodynamischen Kupplung 5 und die Funktion der Versorgung des Schmiermittelsystems der Gesamtanfahreinheit 100 realisiert werden. Die einzelnen Anschlüsse sind dabei wie folgt den entsprechenden Leitungen im Schmiermittelsystem zugeordnet:
- 1. Anschluß 14 -: Betriebsmittelversorgungsquelle 6 und Kühleinrichtung 11
- 2. Anschluß 19 -: Speicher 27
- 3. Anschluß 20 -: Zulauf 30 der hydrodynamischen Kupplung 5
- 4. Anschluß 21 -: Ablauf 32 der hydrodynamischen Kupplung 5
- 5. Anschluß 18 -: Kühleinrichtung 11
- 6. Anschluß 16 -: Schmiermittelleitung 15

Die entsprechenden Anschlußbezeichnungen entsprechen dabei den in der Figur 1 genannten Leitungsbezeichnungen. Des weiteren ist ein weiterer Anschluß für den Steuerdruck pR vorgesehen. Dieser wirkt auf die Fläche 50 des Steuerkolbens 49. Zur Realisierung der Funktion der Druckwaage ist die durch den Druck pR auf die Fläche 50 gerichteten Kraft eine Gegenkraft zugeordnet, welche sich aus der Kraft einer Federspeichereinrichtung 48 und der durch den im Ablauf 32 der hydrodynamischen Kupplung herrschenden Druckes in der Ablaufleitung 21 auf die Kolbenfläche 53 gebildeten Kraft zusammensetzt. Die Federspeichereinrichtung 48 ist dabei in einer entsprechenden Bohrung 51 im Steuerkolben 49 angeordnet. Die Feder stützt sich auf der Bohrungsinnenfläche 52 der Bohrung 51 im Steuerkolben 49 ab.

Der Steuerkolben ist, wie im vorliegenden Fall dargestellt, vorzugsweise wenigstens zweiteilig ausgeführt. Dieser umfaßt einen ersten Teil 49.1 und einen zweiten Teil 49.2. Dies bietet den Vorteil einer rationelleren Fertigung der Steuerbohrung durch Bearbeitung von zwei Seiten.

Für die in der Figur 3 dargestellte Ausführung der Druckwaage sind in den Figuren 4a bis 4d die einzelnen Funktionszustände, wie sie für die Figuren 1 a bis 1 d beschrieben wurden, anhand der Stellungen der Steuerkanten in der Steuerbohrung 57 dargestellt. Die Figur 4a verdeutlicht dabei den ersten Funktionszustand, in welchem die hydrodynamische Kupplung nicht in Betrieb, d.h. ausgeschaltet ist. In diesem Zustand ist der Ablauf 32 über die Leitung 21 und damit den Anschluß 21 mit der Entlastungseinrichtung E verbunden. Des weiteren wird über den Anschluß 16 Schmiermittel bzw. Betriebsmittel von der Betriebsmittelquelle 6 in die Schmiermittelleitung 15 geleitet, weshalb der Anschluß 18 mit dem Anschluß 16 in diesem Zustand in Strömungsverbindung steht. Der Betriebsmittelstrom wird somit lediglich, wie in der Figur 1a bereits beschrieben, über die Kühleinrichtung in die Schmiermittelleitung 15 geleitet.

In der Figur 4b ist die Stellung des Steuerkolbens 49 für den zweiten Funktionszustand der hydrodynamischen Kupplung dargestellt. Dieser Bereich wird auch als Inbetriebnahmebereich der hydrodynamischen Kupplung oder aber Füllphase bezeichnet. Die Füllung erfolgt dabei vorzugsweise über den Speicher 27 und damit die Leitungen bzw. Anschlüsse 19 und 20 sowie zusätzlich über die Leitung bzw. den Anschluß 14 von der Betriebsmittelquelle zur Leitung 20, welche mit dem Zulauf 30 gekoppelt ist. Das Betriebsmittel kann somit, wie in der Figur 4b dargestellt, vom Anschluß 19 in den Anschluß 20 übertreten. Der Ablauf 32 der hydrodynamischen Kupplung 5, welcher mit dem Anschluß 21 gekoppelt ist, steht in dieser Funktionsweise in Strömungsverbindung mit dem Anschluß 18, welcher mit der Kühleinrichtung 11 gekoppelt ist. Die beiden in axialer Richtung außenliegenden Anschlüsse 16 und 14 sind jeweils gesperrt.

Die Figur 4c verdeutlicht die Stellung des Steuerkolbens 49 im Regelzustand der hydrodynamischen Kupplung, wobei der Steuerkolben mit der Steuerkante 64 die Sperrung zwischen den Anschlüssen 14 und 16 verläßt. Eine Strömungsverbindung besteht zwischen den Anschlüssen 14 und 20 sowie zwischen 21 und 18 zum Zwecke der Realisierung eines Kühlkreislaufes, wobei die Einspeisung in den Arbeitsraum der hydrodynamischen Kupplung bzw. zum Zulauf 30 über die Kopplung der Anschlüsse 14 und 20 erfolgt. Die Kopplung mit dem Speicher, insbesondere die Kopplung zwischen den Anschlüssen 19 und 14, ist unterbrochen. Die hydrodynamische Kupplung 5 wird somit nur mit dem Betriebsmittel vom Speicher versorgt, welches er zum Erreichen seines Regelzustandes benötigt. Der Regelzustand bzw. der Beginn dieses Regelzustandes ist dabei von der Überdeckung der Steuerkante 64 mit der entsprechenden Steuerkante in der Steuerbohrung 57 zwischen den Anschlüssen 16 und 14 gekennzeichnet. Der Bereich des Regelzustandes läßt sich dabei des weiteren durch die in Fig. 4d dargestellte Stellung des Steuerkolbens 49 begrenzen. Während sich die Füllphase der hydrodynamischen Kupplung 5 dadurch auszeichnet, daß der Steuerkolben 49 eine Bewegung in axialer Richtung in Richtung des auf die Steuerkolbenfläche 50 wirkenden Steuerdruckes pR erfährt, erfährt der Steuerkolben 49 im Regelzustand eine Bewegung in axialer Richtung entgegen der Wirkrichtung des Steuerdruckes pR. Die beiden Grenzstellungen zur Beschreibung des Regelzustandsbereiches sind in der Figur 4c und 4d dargestellt. Die in der Figur 4d dargestellte zweite Grenz- bzw. Regelstellung zeichnet sich dadurch aus, daß die Steuerkante 62 des Steuerkolbens 49 die Endstellung einnimmt, in welcher die Entlastungsleitung mit der Anschlußleitung 21 und damit dem Ablauf 32 der hydrodynamischen Kupplung 5 verbunden ist. Über den gesamten Regelzustand erfolgt jedoch ein Betriebsmittelumlauf vom Ablauf 32 der hydrodynamischen Kupplung zur Kühleinrichtung über die Leitung 21 zum Anschluß 18 und nach Passieren der Kühleinrichtung erneut zum Zulauf 30 der hydrodynamischen Kupplung über die Leitung bzw. Anschlüsse 14 und 20. Des weiteren wird kurz nach Erreichen des Regelzustandes eine Betriebsmittelversorgung zur Schmiermittelleitung 15 der Anfahreinheit 100 realisiert.

Die Steuereinrichtung 8, insbesondere die Druckwaage 10, welche über einen Steuerdruck pR, welcher beispielsweise wie in den Figuren 1a bis 1d dargestellt, über ein Proportionalventil 70 eingestellt wird, angesteuert wird, ermöglicht die Kopplung der einzelnen Leitungsabschnitte bzw. der einzelnen Leitungen miteinander in entsprechender Art und Weise, um der hydrodynamischen Kupplung 5 in entsprechende Funktionszustände zu bringen. Des weiteren sind dem gemeinsam genutzten Schmier- bzw. Betriebsmittelversorgungssystem Mittel zugeordnet, welche im Zusammenwirken mit der Steuereinrichtung 8 bestimmte Funktionen im Betriebs- bzw. Schmiermittelversorgungssystem vorrangig erfüllen.

Entsprechend der zu erfüllenden Aufgabenstellung können diese Mittel unterschiedlich konzipiert und ausgelegt werden. In den Figuren 1a bis 1d sind zur Verhinderung von Einbrüchen in der Schmierölversorgung der Anfahreinheit 100 während des Funktionszustandes FÜLLEN bzw. des Regelzustandes die Ventile VLB1 und VLB2 sowie R5 angeordnet. Bei der Ventileinrichtung VLB2, welche in der Verbindungsleitung zwischen der Hauptverbindungsleitung zwischen dem Ölsumpf 6 und der Leitung 14 angeordnet ist, handelt es sich um ein Druckbegrenzungsventil. Die Ventileinrichtung VLB1, die in einer Verbindungsleitung zwischen der Schmierölleitung und der Hauptleitung 13 angeordnet ist, ist als Druckminderventil ausgeführt. Die Ventileinrichtung R5 ist als Rückschlagventil konzipiert. Beim Absinken des Druckes in der Schmierölleitung 15 unter ein bestimmtes Niveau verbindet die Ventileinrichtung VLB1, d.h. das Druckminderventil, die Hauptleitung 13 und damit die Betriebsmittelversorgungsquelle mit der Schmierleitung 15. Die hydrodynamische Kupplung befindet sich dann bezüglich der Betriebsmittelversorgung in einem Bypass. Dabei ist es unerheblich, in welchem Funktionszustand sich die hydrodynamische Kupplung bereits befindet. Die Ventileinrichtung VLB2 erzeugt einen leichten Druckstau, damit der erforderliche Schmierölstrom von der Hauptleitung 13 über VLB1 nach der Schmierleitung 15 stattfinden kann.

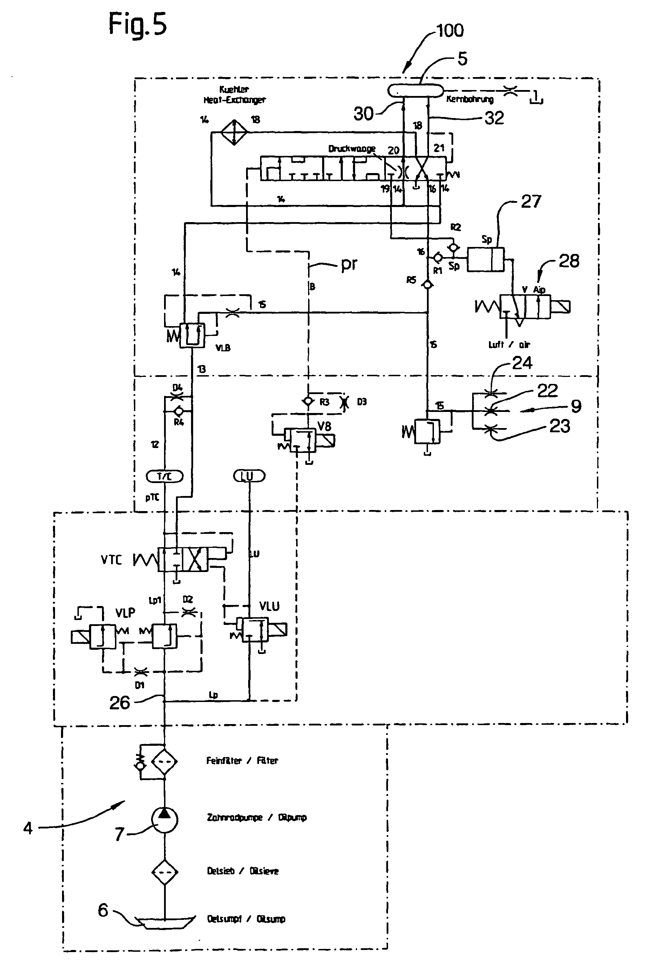

Während die Ausführung entsprechend den Fig. 1a bis 1d mit den Ventilen VLB1 und VLB2 immer einen gewissen Druck im Schmiersystem der Anfahreinheit während des Betriebes gewährleisten, verdeutlicht die Fig. 5 eine andere Möglichkeit der Versorgung des Schmiermittelsystems der Anfahreinheit 100 über einen Mengenregler, welcher eine bestimmte Ölmenge, die über eine Drossel oder Feder eingestellt werden kann, in das Schmiersystem 15 leitet und zwar unabhängig von den vorherschenden Druckverhältnissen. Die Ventileinrichtungen VLB1 und VLB2 werden dazu durch eine Ventileinrichtung VLB ersetzt.

Eine alternative Möglichkeit der konstruktiven Ausgestaltung des Betriebs- bzw. Schmiermittelversorgungssystems 4 zur Gewährleistung der Schmierung der Anfahreinheit 100 während der Füllung ist in Fig. 1d dargestellt. Der Grundaufbau des Gesamtsystems - hydrodynamische Kupplung 5, Anfahreinheit 100 und Überbrückungskupplung 3 ausgenommen jedoch die Ventileinrichtungen VLB1 und VLB2 entspricht dabei dem in den Fig. 1 a-1 d beschriebenen, weshalb für gleiche Elemente die gleichen Bezugszeichen verwendet werden. Dabei wird eine mininimale Schmiermittelversorgung, die über eine Drossel D8 oder alternativ eine Feder eingestellt werden kann, im Schmiermittelversorgungssystem 15 unabhängig von den vorhandenen Drücken gewährleistet. Desweiteren ist zur Realisierung dieser Funktion ein Rückschlagventil R6 vorgesehen. Die Drossel D8 und das Rückschlagventil R6 sind dazu in einer Verbindungsleitung 100 zwischen der Schmiermittelversorgungsleitung 15 und der Verbindungsleitung 8 vom Proportionalventil 70 zur Sollwertvorgabe bzw. Erzeugung eines Sollwertsignales in Form eines Druckes für einen gewünschten Funktionszustand der hydrodynamischen Kupplung mit der Steuereinrichtung 8, insbesondere der Druckwaage 10 angeordnet. Diese Anordnung bietet den Vorteil, daß die Einrichtung nur im Betrieb wirksam ist, und so im Fahrbetrieb kein Kühlöl verlorengeht. Desweiteren besteht die Möglichkeit, die in der Fig. 1d beschriebene Konfiguration sehr kostengünstig für bereitzustellen.

Die Drucksteuerung der hydrodynamischen Kupplung ist dabei derart ausgeführt, daß im Betrieb die Schmierung der Anfahreinheit direkt aus dem Sumpf 6 erfolgt, da dort das kälteste Betriebsmittel zur Verfügung steht. Das Betriebsmittel gelangt von der Betriebsmittelquelle 6 zur Steuerung, wo eine geringe Menge zum Ausgleich von Undichtheiten abgezweigt wird, während der Hauptanteil der Schmierung 15 der Anfahreinheit zufließt.

Die Steuereinrichtung, insbesondere die Druckwaage und die mit dieser gekoppelten bzw. in einer Baueinheit integrierten Ventileinrichtungen können unterschiedlich hinsichtlich der in der Steuerbohrung gebildeten Kammern, der Steuerkanten des Steuerkolbens und der Zuordnung der Anschlüsse zu diesen ausgeführt sein. Wesentlich ist jedoch, daß die vier Grundfunktionszustände der Steuerung der hydrodynamischen Kupplung erfüllt werden, wobei wenigstens im Regelzustand stufenweise und vorzugsweise ein stufenloser Übergang zwischen den einzelnen Grundfunktionszuständen erzielt wird.

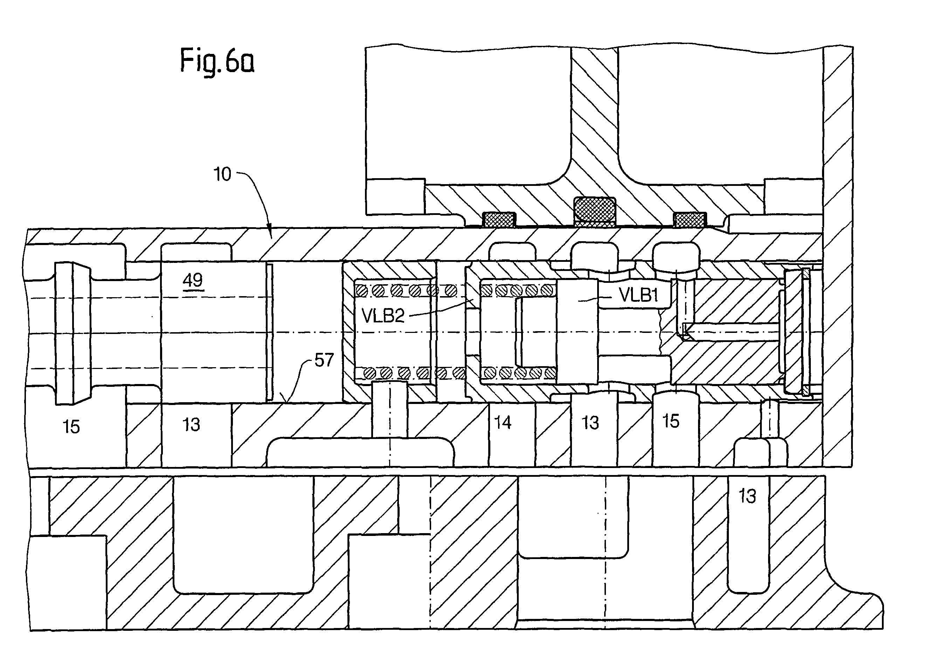

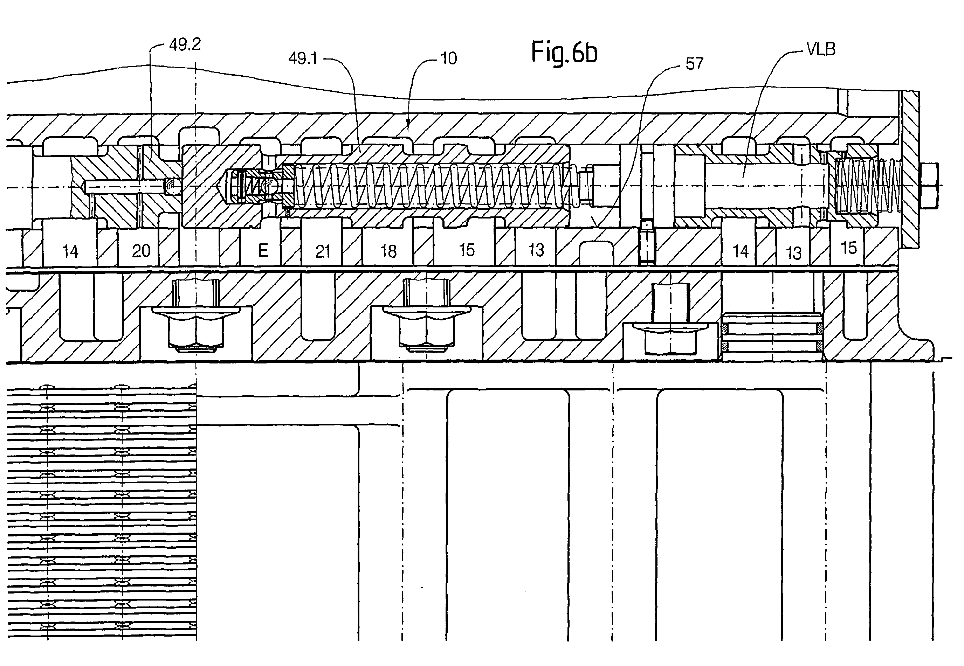

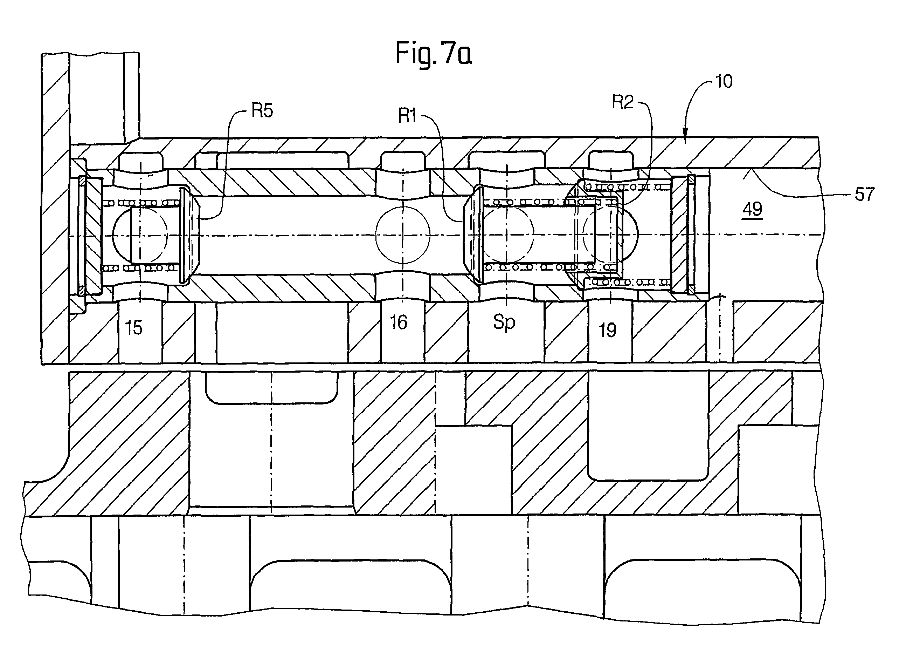

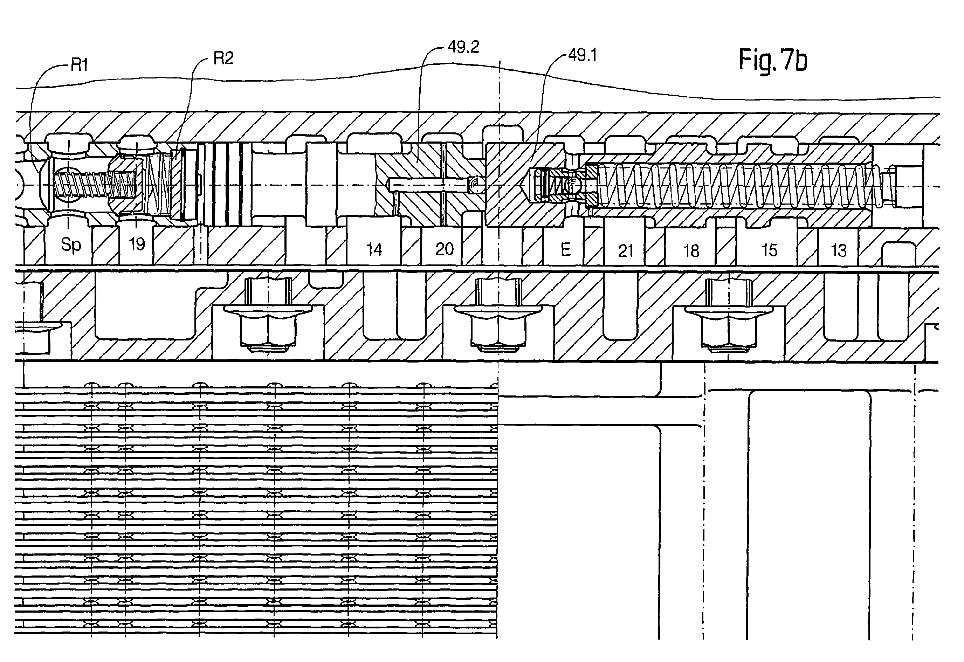

Die Figuren 6 und 7 verdeutlichen anhand eines Ausschnittes aus der Druckwaage 10 die Möglichkeiten der Anordnung einzelner Ventileinrichtungen, wie beispielsweise VLB1 und VLB2, sowie den Mengenregler VLB in der Steuerbohrung 57. Während Fig. 6a anhand eines Ausschnittes aus der Druckwaage 10 die Anordnung der Ventileinrichtungen VLB1 und VLB2 in der Steuerbohrung 57 wiedergibt, ist in Fig. 6b neben der Anordnung des Mengenreglers VLB in der Steuerbohrung 57 eine Ausführung des Steuerkolbens 49 dargestellt, welche zweiteilig ist.

Die Fig. 7a zeigt demgegenüber die Anordnung der Rückschlagventile R1, R2 und R5 im Steuerkolben 49 für eine Ausführung entsprechend Fig. 6a und die Fig. 7b für eine Ausführung des Steuerkolbens 49 entsprechend Fig. 6b. Diese Anordnung erfolgt dabei derart, daß die Rückschlagventileinrichtungen Einfluß auf die Leitungsquerschnitte entsprechend der in Figur 1 dargestellten Art und Weise ausüben können, d.h. diese sind den entsprechenden Leitungen zugeordnet.

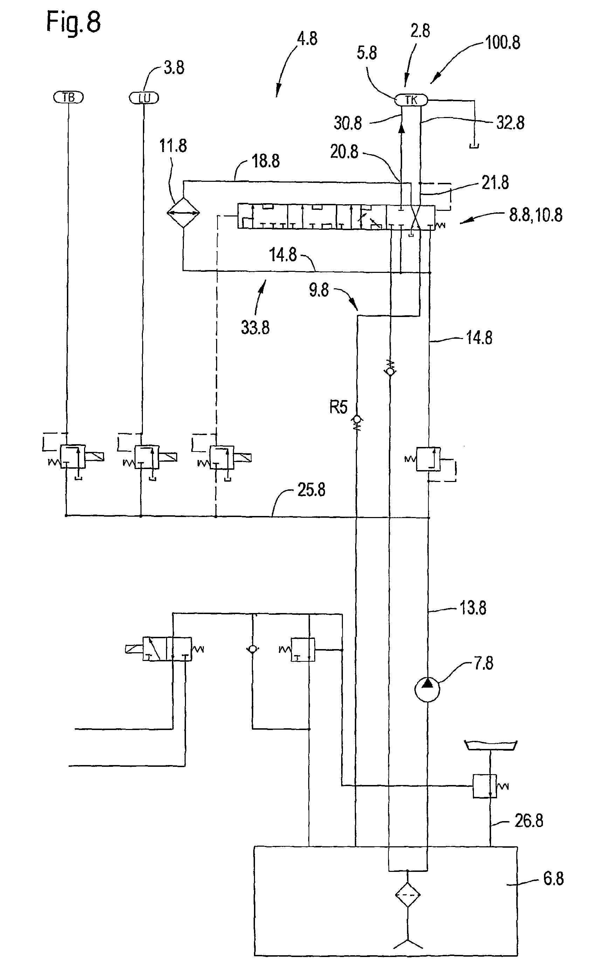

Figur 8 verdeutlich ein vereinfachtes Schmiermittel- bzw. Betriebsmittelversorgungssystem 4.8 anhand einer Darstellung gemäß Figur 1a für eine Anfahreinheit 100.8. Das Grundprinzip der Versorgung des hydrodynamischen Bauelementes 2.8 in Form der hydrodynamischen Kupplung 5.8 entspricht dem in den Figuren 1 beschriebenen. Für gleiche Elemente werden daher die gleichen Bezugszeichen verwendet. Das Schmiermittel-bzw. Betriebsmittelversorgungssystem 4.8 umfaßt eine Betriebsmittelquelle 6.8, hier in Form eines Ölsumpfes, hier eines verschließbaren Ölsumpfes aus welchem mittels einer Pumpeinrichtung, hier der Zahnradpumpe 7.8 das Öl in die entsprechenden Leitungssysteme zur Versorgung der einzelnen Elemente - hydrodynamische Kupplung 5.8 und/oder Anfahreinheit 100 - erfolgt.

Der hydrodynamischen Kupplung 5.8 ist erfindungsgemäß eine Steuereinrichtung 8.8 zugeordnet, welche neben der Steuerung einer den Funktionszustand der hydrodynamischen Kupplung 5.8 wenigstens mittelbar charakterisierenden Größe, vorzugsweise des Füllungsgrades, verschiedene Versorgungsaufgaben, beispielsweise die Ansteuerung bzw. Versorgung der Überbrückungskupplung und die Versorgung der Gesamt-Anfahreinheit 100 mit Schmiermittel realisiert bzw. steuert. Die Steuereinrichtung 8.8 zur Steuerung einer den Funktionszustand der hydrodynamischen Kupplung 5.8 wenigstens mittelbar charakterisierenden Größe ist als Druckwaage 10.8 ausgeführt. Das Funktionsprinzip beruht dabei auf der Kompensation der auf einen Kolben bekannter Querschnittsfläche oder die Sperrflüssigkeit in einem Ringrohr wirkenden Druckkraft durch eine Gegenkraft, wobei durch Verschiebung beispielsweise des Kolbens ein Kräftegleichgewicht eingestellt wird. Dazu ist eine Sollgröße für eine, den Funktionszustand der hydrodynamischen Kupplung wenigstens mittelbar charakterisierende Größe als Eingangsgröße einer, dem gemeinsam zugeordneten Schmiermittel- bzw. Betriebsmittelversorgungssystem 4.8 zugeordneten Steuereinrichtung 8.8 zur Ansteuerung einer Stelleinrichtung zur Beeinflussung der Betriebsmittelversorgung der hydrodynamischen Kupplung 5.8 und der Schmiermittelversorgung der Gesamt-Anfahreinheit 100 vorgebbar. Die Stellgröße zur Betätigung der Stelleinrichtung wird dann aus dem Sollwert der den Funktionszustand der hydrodynamischen Kupplung wenigstens mittelbar charakterisierende Größe in Abhängigkeit einer den Druck in einer Ablaufleitung 32.8 der hydrodynamischen Kupplung 5.8 wenigstens mittelbar charakterisierenden Größe erzeugt.

Über die Druckwaage 10.8 sind wenigstens drei, vorzugsweise vier Grundfunktionszustände der hydrodynamischen Kupplung 5.8 einstellbar, vorzugsweise erfolgt die Verstellung jedoch stufenlos. Bezüglich des Aufbaus der Druckwaage 10.8 wird auf die Figuren 3 und 4 verwiesen.

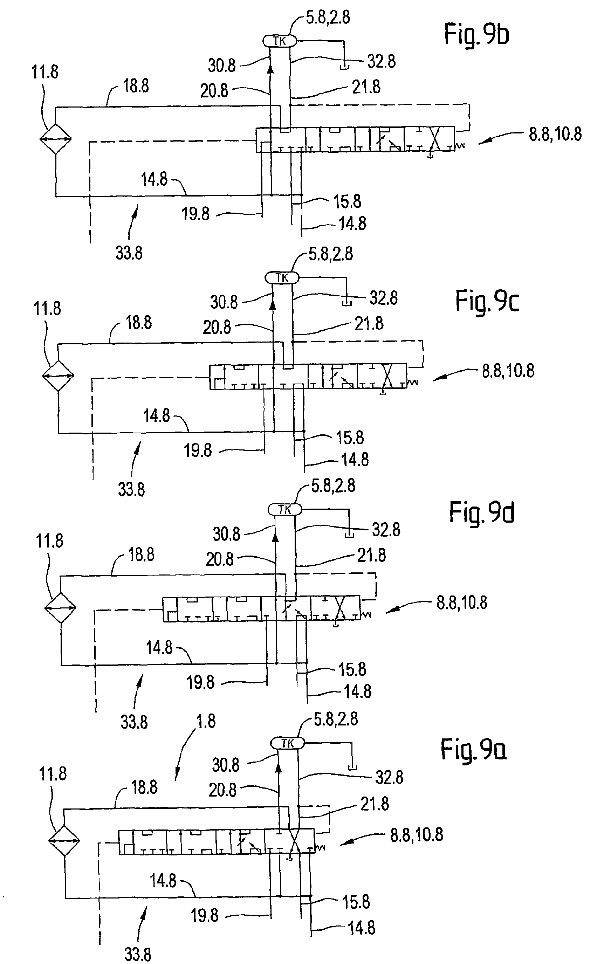

In einem ersten Funktionszustand der hydrodynamischen Kupplung 5.8 wird Betriebsmittel von der Betriebsmittelquelle 6.8 über eine Kühleinrichtung 11.8 in das Schmiermittelsystem 9.8 eingespeist. Dieser Funktionszustand ist in der Figur 9a anhand eines Ausschnittes aus dem Hydraulikplan gemäß Figur 8 dargestellt. Das Betriebsmittel, als welches vor allem Öl Verwendung findet, gelangt vom Ölsumpf 6.8 über die Leitung 13.8 in den sich daran anschließenden Leitungsabschnitt 14.8, die Kühleinrichtung. 11.8 und die Leitung 18.8 in die Schmierleitung 15.8, welche mit den Schmiermittelanschlüssen des Schmiermittelversorgungssystems 9.8 der Anfahreinheit 100.8 gekoppelt ist. In diesem Funktionszustand ist die hydrodynamische Kupplung 5.8 vollständig entleert, es wird auch kein Betriebsmittel in den torusförmigen Arbeitsraum eingeführt. Der ausgeschaltete Zustand der hydrodynamischen Kupplung 5.8 entspricht dem ersten Funktionszustand. In diesem Zustand wird kein Drehmoment übertragen, und das Betriebsmittel wird lediglich zur Schmierung der einzelnen Elemente der Anfahreinheit 100.8 benötigt. In der Schmierleitung 15.8 ist vorzugsweise ein Rückschlagventil R5 angeordnet, welches verhindert, daß das Betriebsmittel aus der Schmierleitung 15.8 zurückströmt.

Das von der Anfahreinheit 100.8, d.h. von der hydrodynamischen Kupplung 5.8 und der Überbrückungskupplung 3.8 gemeinsam genutzte Schmiermittel- bzw. Betriebsmittelversorgungssystem 4.8 versorgt auch die Überbrückungskupplung 3.8 mit dem erforderlichen Steuerdruck. Im dargestellten Fall in der Figur 1a ist die Versorgungsleitung 25.8 direkt an die Hauptversorgungsleitung 26.8 gekoppelt, welche die Pumpeinrichtung, hier die Zahnradpumpe 7.7, mit der Leitung 13.8 verbindet.

Der Zustand der Inbetriebnahme der hydrodynamischen Kupplung 5.8, die sogenannte Füllphase, kann durch die in der Figur 9b mittels der Druckwaage 10.8 dargestellten bzw. realisierten Leitungsverbindungen für die Schaltstellung 1 beschrieben werden. Der Füllvorgang erfolgt dabei im wesentlichen über den Ölsumpf 6.8, welcher über eine Leitung 14.8 mit dem Zulauf 30.8 mittels der Druckwaage 10.8 koppelbar ist. Dabei ist vorzugsweise in der Leitung 14.8 ein Druckbegrenzungsventil VLP vorgesehen.

Das Betriebsmittel gelangt über die Hauptleitung 26.8 in die Verbindungsleitung 13.8 in die Leitung 14.8. Das Betriebsmittel gelangt dann über die Leitung 14.8, die Koppelung zwischen der Leitung 14.8 mit der Leitung 20.8, welche mit dem Zulauf 30.8 der hydrodynamischen Kupplung gekoppelt ist, in die hydrodynamische Kupplung 5.8. Infolge der sich einstellenden Druckdifferenzen in der hydrodynamischen Kupplung 5.8 tritt Betriebsmittel über den Ablauf 32.8 in die Leitung 21.8 und wird durch die diesen Funktionszustand charakterisierende Stellung bzw. Stellungen der Druckwaage 10.8 in die Verbindungsleitung zum Kühler 11.8 eingespeist und über diesen wieder der Leitung 14.8 zugeführt, um erneut in die hydrodynamische Kupplung 2 eingespeist zu werden. Es bildet sich somit bereits während der Füllphase ein geschlossener Kühlkreislauf zwischen dem Ablauf 32.8 der hydrodynamischen Kupplung 5.8 und dem Zulauf 30.8 aus. Dieser geschlossene Kreislauf kann auch als Kühlkreislauf bezeichnet werden und ist hier mit 33.8 gekennzeichnet.

Ein weiterer dritter Funktionszustand der hydrodynamischen Kupplung 5.8 kann durch die Stellung der Druckwaage 10.8 und die dadurch realisierten Verbindungen zwischen den einzelnen Leitungen, wie in der Figur 9c dargestellt, beschrieben werden. Dieser Funktionszustand beschreibt den Regelzustand der hydrodynamischen Kupplung 5.8. Die Leitungen 14.8 und 20.8 sind miteinander gekoppelt und damit mit dem Zulauf 30.8 der hydrodynamischen Kupplung 5.8. Der Druck im Kanal 14.8 entspricht annähernd dem Zuflüßwiderstand in der Leitung 20.8. Die Pumpeinrichtung in Form der Zahnradpumpe 7.8 fördert lediglich die Leckagemenge der hydrodynamischen Kupplung nach. Überschüssiges Betriebsmittel, welches von der Pumpeinrichtung, insbesondere der Zahnradpumpe 7.8, gefördert wurde, gelangt von der Leitung 14.8 in die Schmiermittelleitung 15.8 oder über diese wieder zurück in den verschließbaren Sumpf 6.8. Aufgrund der sich einstellenden Druckdifferenzen in der Kupplung 5.8 wird auch hier ein Kühlmittelkreislauf 33.8 erzeugt, wobei das Kühlmittel vom Ablauf 32.8 in die Verbindungsleitung 18.8 zur Kühleinrichtung 11.8 gelangt und nach Passieren der Kühleinrichtung 11.8 der Zufuhrleitung 14.8 zugeführt wird und in den Zulauf 30.8 der hydrodynamischen Kupplung eingespeist wird, wobei überschüssiges Betriebsmsittel über die Leitung 19.8 in den Sumpf 6.8 zurückgefördert wird. Dieser dritte Funktionszustand, welcher der Schaltstellung 2 in Figur 8 entspricht, kann noch einmal in einen weiteren vierten Funktionszustand unterteilt werden, weicher für die Einstellung von sehr geringen Drücken, d.h. der Erzeugung eines geringeren Übertragungsmomentes, erforderlich ist, welcher der Schaltstellung 3 der Druckwaage 10.8 entspricht und in Figur 9d dargestellt ist. In diesem Funktionszustand wird der Zulaufdruck abgesenkt.

Bezüglich den einzelnen Stellungen des Steuerschiebers der Druckwaage 10 zur Realisierung der einzelnen Funktionszustände wird in Analogie auf die Figuren 4a bis 4d verwiesen.

## Patentansprüche

1. Verfahren zur Steuerung der Befüllung einer hydrodynamischen Kupplung (5) aus einem, dieser zugeordneten Schmiermittel- bzw. Betriebsmittelversorgungssystem (4), umfassend wenigstens eine Betriebsmittelquelle (6), optional eine Kühleinrichtung (11), wobei die hydrodynamische Kupplung (5) mindestens zwei Schaufelräder umfasst, welche miteinander einen torusförmigen Arbeitsraum bilden, dem wenigstens eine Zulaufleitung (30) und eine Ablaufleitung (32) zugeordnet sind und bei welchem die hydrodynamische Kupplung (5) Bestandteil einer Anfahreinheit (100) mit Überbrückungskupplung (3) ist und der hydrodynamischen Kupplung (5) und Überbrückungskupplung (3) das Schmiermittel- bzw. Betriebsmittelversorgungssystem (4) gemeinsam zugeordnet ist;
bei welchem eine Sollgröße für eine, den Funktionszustand der hydrodynamischen Kupplung (5) in Form eines Steuerdruckes charakterisierende Größe als Eingangsgröße einer, dem zugeordneten Schmiermittel- bzw. Betriebsmittelversorgungssystem (4) zugeordneten Steuereinrichtung (8), umfassend eine Druckwaage (10) zur Ansteuerung einer Stelleinrichtung zur Beeinflussung der Betriebsmittelversorgung der hydrodynamischen Kupplung (5) derart vorgebbar ist, dass wenigstens drei Grundfunktionszustände der hydrodynamischen Kupplung (5) einstellbar sind, wobei die Stellgröße zur Betätigung der Stelleinrichtung aus dem Steuerdruck der hydrodynamischen Kupplung (5) in Abhängigkeit des Druckes in der Ablaufleitung (32) der hydrodynamischen Kupplung (2) erzeugt wird und
- bei welchem in einem ersten Grundfunktionszustand der hydrodynamischen Kupplung (5) diese entleert ist und Betriebsmittel von der Betriebsmittelquelle (6) über die Kühleinrichtung (11) dem Schmiermittelanschluß (15) der Anfahreinheit (100) zugeführt wird;
- bei welchem in einem zweiten Grundfunktionszustand der hydrodynamischen Kupplung (5) dem Arbeitsraum der hydrodynamischen Kupplung (5) Betriebsmittel von der Betriebsmittelquelle (6) zugeführt wird und in einem geschlossenen Kreislauf Betriebsmittel aus dem Arbeitsraum über die Kühleinrichtung (11) dem Arbeitsraum wieder zu geführt wird;
- bei welchem in einem dritten Grundfunktionszustand der Druck in der Ablaufleitung (32) vom Arbeitsraum veränderlich einstellbar ist und dem Arbeitsraum der hydrodynamischen Kupplung (5) Betriebsmittel von der Betriebsmittelquelle (6) zugeführt wird und in einem geschlossenen Kreislauf Betriebsmittel aus dem Arbeitsraum über die Kühleinrichtung (11) dem Arbeitsraum wieder zugeführt wird;
- bei welchem zusätzlich eine Versorgung des Schmiermittelsystems der Anfahreinheit (100) einstellbar ist.

2. Verfahren nach Anspruch 1, wobei das Schmiermittel- bzw. Betriebsmittelversorgungssystem (4) des weiteren einen Speicher (27) umfaßt, **dadurch gekennzeichnet, daß** im zweiten und dritten Grundfunktionszustand dem Arbeitsraum der hydrodynamischen Kupplung (5) zusätzlich Betriebsmittel vom Speicher (27) zugeführt wird.

3. Verfahren nach Anspruch 1 oder 2, **dadurch gekennzeichnet, daß** wenigstens im dritten Grundfunktionszustand die Änderung des Druckes in der Ablaufleitung (32) zum Arbeitsraum stufenlos einstellbar ist.

4. Verfahren nach einem der Ansprüche 1 bis 3, **dadurch gekennzeichnet, daß** der Übergang zwischen den einzelnen Funktionszuständen stufenlos einstellbar ist.

5. Verfahren nach einem der Ansprüche 1 bis 4, **dadurch gekennzeichnet, dass** die Versorgung der hydrodynamischen Kupplung (5) mit Betriebsmittel vorrangig vor der Versorgung der gesamten Anfahreinheit mit Schmiermittel erfolgt.

6. Steuervorrichtung zur Beeinflussung des Funktionszustandes einer hydrodynamischen Kupplung (5) mit einem dieser zugeordneten Schmier- und Betriebsmittelversorgungssystem (4), umfassend wenigstens eine Betriebsmittelquelle (6), eine Kühleinrichtung (11), wobei die hydrodynamische Kupplung (5) mindestens zwei Schaufelräder, welche miteinander einen torusförmigen Arbeitsraum bilden und eine Zulaufleitung (30) und eine Ablaufleitung (32) umfaßt;
6.1 mit einer Steuereinrichtung (8) mit wenigstens einem Eingang für eine den Sollfunktionszustand wenigstens mittelbar charakterisierende Größe und einer Mehrzahl von Ausgängen;
6.2 die Ausgänge sind mit Mitteln zur Beeinflussung der Zu- und Ablaufleitung (30, 32) der hydrodynamischen Kupplung gekoppelt;
6.3 es sind weitere Mittel zur Beeinflussung des Zulaufes aus einer Betriebsmittelquelle (6) und der Realisierung eines Betriebsmittelumlaufes in einem geschlossenen Kreislauf aus der hydrodynamischen Kupplung (5) vorgesehen;
6.4 die Steuereinrichtung (8) umfaßt eine Druckwaage (10);
6.5 die Druckwaage (10) weist wenigstens eine Steuerbohrung (57) auf;
6.6 die Steuerbohrung (57) ist mit wenigstens den folgenden Anschlüssen wenigstens mittelbar verbunden:
- Zulaufleitung (30) der hydrodynamischen Kupplung (5)
- Ablaufleitung (32) der hydrodynamischen Kupplung (5)
- Betriebsmittelversorgungsquelle (6)
6.7 die Druckwaage (10) weist desweiteren wenigstens einen in der Steuerbohrung (57) unter wenigstens teilweiser Freigabe und Absperrung der Kopplung mit den Anschlüssen führbaren Steuerkolben (49) auf, welcher von einer Druckkraft, die der den Sollfunktionszustand wenigstens mittelbar charakterisierenden Größe wenigstens proportional ist und einer Gegenkraft, die durch den Druck in der Ablaufleitung (32) der hydrodynamischen Kupplung (5) charakterisiert ist, beaufschlagbar ist, wobei durch Verschiebung des Steuerkolbens (49) ein Kräftegleichgewicht eingestellt wird.

7. Steuervorrichtung nach Anspruch 6, **dadurch gekennzeichnet, dass** die Steuerbohrung (57) mit den folgenden Anschlüssen für Leitungen (18, 14) eines geschlossenen, dem Arbeitsraum der hydrodynamischen Kupplung (5) zugeordneten hydrodynamischen Kreislaufes (33) verbunden ist.

8. Steuervorrichtung nach einem der Ansprüche 6 oder 7, **gekennzeichnet durch** die folgenden Merkmale:
8.1 die Ausgänge werden von den Anschlüssen für Leitungen (20, 19, 14, 16) gebildet;
8.2 die Mittel zur Beeinflussung der Zu- und Ablaufleitungen (30, 32) der hydrodynamischen Kupplung (5) werden von der Druckwaage (10) gebildet.

9. Steuervorrichtung nach einem der Ansprüche 6 bis 8, **dadurch gekennzeichnet, dass** der Eingang der Druckwaage (10) für eine, den Funktionszustand der hydrodynamischen Kupplung (5) wenigstens mittelbar beschreibende Größe von einem hydraulischen Anschluss zur Bildung einer Druckkraft auf eine Kolbenfläche des Steuerkolbens (57) gebildet wird.

10. Steuervorrichtung nach Anspruch 9, **dadurch gekennzeichnet, dass** der Eingang der Druckwaage (10) mit einem Proportionalventil (70) als Einrichtung zur Vorgabe eines Sollfunktionszustandes gekoppelt ist.

11. Steuervorrichtung nach einem der Ansprüche 6 bis 8, **dadurch gekennzeichnet, dass** zur Vorgabe des Sollfunktionszustandes der Steuerkolben (49) mit einer elektromagnetisch erzeugbaren Kraft beaufschlagbar ist.

12. Steuervorrichtung nach einem der Ansprüche 6 bis 8, **dadurch gekennzeichnet, dass** zur Vorgabe des Sollfunktionszustandes der Steuerkolben (49) mit einer mechanisch erzeugbaren Kraft beaufschlagbar ist.

13. Steuervorrichtung nach einem der Ansprüche 5 bis 12, **dadurch gekennzeichnet, dass** der Steuerkolben (49) wenigstens zwei Teilelemente (49.1, 49.2) umfasst, welche miteinander fest verbindbar sind.

14. Steuervorrichtung nach einem der Ansprüche 6 bis 13, **gekennzeichnet durch** die folgenden Merkmale:
14.1 die hydrodynamische Kupplung (5) ist Bestandteil einer Anfahreinheit, umfassend eine Überbrückungskupplung;
14.2 das der hydrodynamischen Kupplung (5) zugeordnete Schmiermittel- bzw. Betriebsmittelversorgungssystem (4) ist auch der Überbruckungskupplung zugeordnet;
14.3 die Ausgänge der Steuereinrichtung (8) sind mit Mitteln zur Beeinflussung der Leitungen (15) des Schmiermittelversorgungssystems (9) der Anfahreinheit (100) gekoppelt.

15. Steuervorrichtung nach einem der Ansprüche 6 bis 14, **dadurch gekennzeichnet, dass** die Steuerbohrung (57) mit einer Schmiermittelversorgungsleitung (15) gekoppelt ist.

16. Steuervorrichtung nach Anspruch 15, **dadurch gekennzeichnet, dass** zur Realisierung einer fortlaufenden Schmiermittelversorgung wenigstens ein Mengenregelventil (VLB) zwischen den Anschlüsen der Schmiermittelversorgungsleitung (15) und der Zulaufleitung (30) zur hydrodynamischen Kupplung (5) in der Steuerbohrung (57) vorgesehen ist.

17. Steuervorrichtung nach Anspruch 15, **dadurch gekennzeichnet, dass** zur Realisierung einer fortlaufenden Schmiermittelversorgung wenigstens zwei druckabhängig betätigbare Ventileinrichtungen (VLB1, VLB2) in der Steuerbohrung (57) vorgesehen sind, wobei über eine erste Ventileinrichtung (VLB1) die Koppelung zwischen Betriebsmittelversorgungsquelle (6) und Zulaufleitung (30) der hydrodynamischen Kupplung (5) und die zweite Ventileinrichtung (VLB2) die Koppelung zwischen Betriebsmittelversorgungsquelle (6) und Schmiermittelversorgungssystem (9) der Anfahreinheit (100) erfolgt.

18. Steuervorrichtung nach einem der Ansprüche 6 bis 17, für ein Antriebssystem mit einer Speichereinrichtung (27) **gekennzeichnet durch** die folgenden Merkmale:
18.1 die Druckwaage (10) weist einen Anschluss für eine Leitung (19) auf, welcher mit der Speichereinrichtung verbunden ist und **durch** Verschiebung des Steuerkolbens (57) mit der Zulaufleitung (30) der hydrodynamischen Kupplung (5) koppelbar ist;
18.2 der Anschlussleitung (19) ist eine Ventileinrichtung (R2) zur Verhinderung des Betriebsmittelrücklaufes aus dem hydrodynamischen Bauelement zugeordnet.

19. Steuervorrichtung nach Anspruch 18, **gekennzeichnet durch** die folgenden Merkmale:
19.1 die Speichereinrichtung (27) ist mit der Schmiermittelversorgungsleitung (15) verbunden, wobei in der Verbindungsleitung Mittel zur Verhinderung des Ausschiebens der Speichermenge in die Schmiermittelversorgungsleitung (15) vorgesehen sind;
19.2 die Mittel umfassen zwei Rückschlagventileinrichtungen (R1, R5).

20. Steuervorrichtung nach Anspruch 19, **dadurch gekennzeichnet, dass** die Ventileinrichtung (R2) und die Rückschlagventileinrichtungen (R1, R5) in der Steuerbohrung (57) der Druckwaage (10) angeordnet sind.

21. Steuervorrichtung nach einem der Ansprüche 17 oder 19, **dadurch gekennzeichnet, dass** jeweils die zur Realisierung einer fortlaufenden Schmiermittelversorgung zwei druckabhängig betätigbaren Ventileinrichtungen (VLB1, VLB2) und die in der Steuerbohrung (57) anordenbaren Rückschlagventileinrichtungen (R1, R5) und die Ventileinrichtung (R2) in einer Ventilbaueinheit zusammengefasst sind.

## Claims

1. A method for controlling the filling of a hydrodynamic coupling (5) from a lubricant or operating medium supply system (4) associated with the same, comprising at least one operating medium source (6), optionally a cooling device (11), with the hydrodynamic coupling (5) comprising at least two blade wheels which form a toroidal working chamber with each other, to which is assigned at least one feed line (30) and one discharge line (32) and in which the hydrodynamic coupling (5) is a component of a starting unit (100) with a lock-up clutch (3), and the lubricant or operating medium supply system (4) is associated with the hydrodynamic clutch (5) and the lock-up clutch (3) jointly;
in which a setpoint variable can be predetermined for a variable characterizing the functional state of the hydrodynamic clutch (5) in the form of a control pressure as an input variable of a control device (8) associated with the associated lubricant or operating medium supply system (4), which control device comprises a pressure balance (10) for triggering an actuating device for influencing the operating medium supply of the hydrodynamic clutch (5), such that at least three basic functional states of the hydrodynamic clutch (5) can be set, with the correcting variable for actuating the actuating device being generated from the control pressure of the hydrodynamic clutch (5) depending on the pressure in the discharge line (32) of the hydrodynamic clutch, and
- in which in a first basic functional state of the hydrodynamic clutch (5) the same is emptied and operating medium is supplied from the operating medium source (6) via the cooling device (11) to the lubricant connection (15) of the starting unit (100);
- in which in a second basic functional state of the hydrodynamic clutch (5) operating medium is supplied from the operating medium source (6) to the working chamber of the hydrodynamic clutch (5) and operating medium is guided in a close circulation from the working chamber via the cooling device (11) to the working chamber again;
- in which in a third basic functional state the pressure in the discharge line (32) from the working chamber is adjustable in a changeable manner and the working chamber of the hydrodynamic clutch (5) is supplied with operating medium from the operating medium source (6) and operating medium is supplied in a closed circulation from the working chamber via the cooling device (11) to the working chamber again;
- in which additionally a supply of the lubricant system of the starting unit (100) is adjustable.

2. A method according to claim 1, with the lubricant or operating medium supply system (4) further comprising a storage unit (27), **characterized in that** in the second and third basic functional state operating medium is additionally supplied from the storage unit (27) to the hydrodynamic clutch (5).

3. A method according to claim 1 or 2, **characterized in that** at least in the third basic functional state the change of the pressure in the discharge line (32) to the working chamber is continuously adjustable.

4. A method according to one of the claims 1 to 3, **characterized in that** the transition between the individual functional states is adjustable in a continuous way.

5. A method according to one of the claims 1 to 4, **characterized in that** the supply of the hydrodynamic clutch (5) with operating medium occurs with priority before the supply of the entire starting unit with lubricant.

6. A control apparatus for influencing the functional state of a hydrodynamic clutch (5) with a lubricant and operating medium supply system (4) associated with the same, comprising at least one operating source (6), a cooling device (11), with the hydrodynamic clutch (5) comprising at least two blade wheels which jointly form a toroidal working chamber and a feed line (30) and a discharge line (32);
6.1 with a control device (8) with at least one input for a variable characterizing at least indirectly the setpoint functional state and a plurality of outputs;
6.2 the outputs are coupled with means for influencing the feed and discharge line (30, 32) of the hydrodynamic clutch;
6.3 further means are provided for influencing the inflow from an operating medium source (6) and the realization of an operating medium circulation in a closed circulation from the hydrodynamic clutch (5);
6.4 the control device (8) comprises a pressure balance (10);
6.5 the pressure balance (10) comprises at least one control bore (57);
6.6 the control bore (57) is connected with at least the following connections at least indirectly:
- the feed line (30) of the hydrodynamic clutch (5);
- the discharge line (32) of the hydrodynamic clutch (5);
- the operating medium supply source (6);
6.7 the pressure balance (10) further comprises at least one control piston (49) which can be guided in the control bore (57) by at least partly releasing and blocking the coupling with the connections and can be subjected to a pressure force which is at least proportional to the variable characterizing at least indirectly the setpoint functional state and to a counter-force which is **characterized by** the pressure in the discharge line (32) of the hydrodynamic clutch (5), with a balance of force being set by displacement of the control piston (49).

7. A control apparatus according to claim 6, **characterized in that** the control bore (57) is connected with the following connections for lines (18, 14) of a closed hydrodynamic circulation (33) associated with the working chamber of the hydrodynamic clutch (5).medium

8. A control apparatus according to one of the claims 6 or 7, **characterized by** the following features:
8.1 the outputs are formed by connections for lines (20, 19, 14, 16);
8.2 the means for influencing the feed and discharge lines (30, 32) of the hydrodynamic clutch (5) are formed by the pressure balance (10).

9. A control apparatus according to one of the claims 6 to 8, **characterized in that** the input of the pressure balance (10) for a variable describing the functional state of the hydrodynamic clutch (5) at least indirectly is formed by a hydraulic connection for forming a pressure force on a piston surface of the control piston (57).

10. A control apparatus according to claim 9, **characterized in that** the input of the pressure balance (10) is coupled with a proportional valve (70) as a device for predetermining a setpoint functional state.

11. A control apparatus according to one of the claims 6 to 8, **characterized in that** for predetermining the setpoint functional state the control piston (49) can be subjected to a force generated electromagnetically.

12. A control apparatus according to one of the claims 6 to 8, **characterized in that** for predetermining the setpoint functional state the control piston (49) can be subjected to a force generated mechanically.

13. A control apparatus according to one of the claims 5 to 12, **characterized in that** the control piston (49) comprises at least two partial elements (49.1, 49.2) which can be rigidly connected with one another.

14. A control apparatus according to one of the claims 6 to 13, **characterized by** the following features:
14.1 the hydrodynamic coupling (5) is a component of the starting unit, comprising a lock-up clutch;
14.2 the lubricant or operating medium supply system (4) associated with the hydrodynamic coupling (5) is also associated with the lock-up clutch;
14.3 the outputs of the control device (8) are coupled with means for influencing the lines (15) of the lubricant supply system (8) of the starting unit (100).

15. A control apparatus according to one of the claims 6 to 14, **characterized in that** the control bore (57) is coupled with a lubricant supply line (15).

16. A control apparatus according to claim 15, **characterized in that** for realizing a continuous supply with lubricant at least one volume control valve (VLB) is provided in the control bore (57) between the connections of the lubricant supply line (15) and the feed line (30) to the hydrodynamic clutch (5).

17. A control apparatus according to claim 15, **characterized in that** for realizing a continuous supply with lubricant at least two valve devices (VLB1, VLB2) which can be actuated in a pressure-dependent manner are provided in the control bore (57), with the coupling between the operating medium supply source (6) and the feed line (30) of the hydrodynamic clutch (5) occurring via the first valve device (VLB1) the coupling between operating medium supply source (6) and the lubricant supply source (9) of the starting unit (100) occurring via the second valve device (VLB2).

18. A control apparatus according to one of the claims 6 to 17, for a drive system with a storage device (27), **characterized by** the following features:
18.1 the pressure balance (10) comprises a connection for a line (19) which is connected with the storage device and can be coupled with the feed line (30) of the hydrodynamic clutch (5) by displacement of the control piston (57);
18.2 the connection line (19) is associated with a valve device (R2) for preventing the return flow of operating medium from the hydrodynamic component.

19. A control device according to claim 18, **characterized by** the following features:
19.1 the storage device (27) is connected with the lubricant supply line (15), with means being provided in the connection line for preventing pushing out the stored quantity into the lubricant supply line (15);
19.2 the means comprise two non-return valve devices (R1, R5).

20. A control apparatus according to claim 19, **characterized in that** the valve device (R2) and the non-return valve devices (R1, R5) are arranged in the control bore (57) of the pressure balance (10).

21. A control apparatus according to one of the claims 17 or 19, **characterized in that** the two valve devices (VLB1, VLB2) which can be actuated in a pressure-dependent way for realizing a continuous lubricant supply and the non-return valve devices (R1, R5) which can be arranged in the control bore (57) and the valve device (R2) are combined in a valve module.

## Revendications

1. Procédé de commande du remplissage d'un coupleur hydrodynamique (5) à partir d'un système d'alimentation en lubrifiant ou en fluide de travail (4) associé à celui-ci comportant au moins une source (6) de fluide de travail, en option un organe de refroidissement (11), le coupleur hydrodynamique (5) comprenant au moins deux roues à pales formant entre elles une enceinte de travail de forme torique à laquelle sont associées au moins une conduite d'admission (30) et une conduite d'évacuation (32) et dans lequel le coupleur hydrodynamique (5) fait partie constitutive d'une unité de démarrage (100) avec embrayage de pontage (3) et le système d'alimentation en lubrifiant ou en fluide de travail (4) est associé en commun au coupleur hydrodynamique (5) et à l'embrayage de pontage (3) ; dans lequel une grandeur de consigne pour une grandeur caractérisant l'état de fonctionnement du coupleur hydrodynamique (5) sous forme d'une pression de commande en tant que grandeur d'entrée d'un dispositif de commande (8) associé au système d'alimentation en lubrifiant ou en fluide de travail (4) associé et comprenant une balance manométrique (10) destinée à activer un organe de réglage destiné à influencer l'alimentation en fluide de travail du coupleur hydrodynamique (5) est imposable de manière à ce qu'au moins trois états de fonctionnement de base du coupleur hydrodynamique (5) sont réglables, la grandeur réglante pour l'actionnement de l'organe de réglage étant obtenue à partir de la pression de commande du coupleur hydrodynamique (5) en fonction de la pression dans la conduite d'évacuation (32) du coupleur hydrodynamique (5) et
- dans lequel le coupleur hydrodynamique (5) est vidé dans un premier état de fonctionnement de base de celui-ci, et du fluide de travail est acheminé depuis la source (6) de fluide de travail en passant par l'organe de refroidissement (11) vers le raccord lubrifiant (15) de l'unité de démarrage (100) ;
- dans lequel, dans un deuxième état de fonctionnement de base du coupleur hydrodynamique (5), du fluide de travail est acheminé depuis la source (6) de fluide de travail vers l'enceinte de travail du coupleur hydrodynamique (5) et du fluide de travail est recirculé en circuit fermé dans l'enceinte de travail depuis celle-ci en passant par l'organe de refroidissement (11) ;
- dans lequel, dans un troisième état de fonctionnement de base, la pression dans la conduite d'évacuation (32) de l'enceinte de travail est réglable de manière variable, du fluide de travail étant acheminé depuis la source (6) de fluide de travail dans l'enceinte de travail du coupleur hydrodynamique (5) et du fluide de travail est recirculé en circuit fermé dans l'enceinte de travail depuis celle-ci en passant par l'organe de refroidissement (11) ;
- dans lequel une alimentation du système de lubrifiant de l'unité de démarrage (100) est réglable en supplément.

2. Procédé selon la revendication 1, dans lequel le système d'alimentation en lubrifiant ou en fluide de travail (4) comprend par ailleurs un réservoir (27), **caractérisé en ce que**, dans le deuxième et le troisième état de fonctionnement de base, du fluide de travail contenu dans le réservoir (27) est en plus acheminé vers l'enceinte de travail du coupleur hydrodynamique (5).

3. Procédé selon la revendication 1 ou 2, **caractérisé en ce qu'**au moins dans le troisième état de fonctionnement de base le changement de pression dans la conduite d'évacuation (32) vers l'enceinte de travail est réglable en continu.

4. Procédé selon l'une quelconque des revendications 1 à 3, **caractérisé en ce que** la transition entre les différents états de fonctionnement est réglable en continu.

5. Procédé selon l'une quelconque des revendications 1 à 4, **caractérisé en ce que** l'alimentation en fluide de travail du coupleur hydrodynamique (5) est prioritaire par rapport à l'alimentation en lubrifiant de l'unité de démarrage dans son ensemble.

6. Dispositif de commande destiné à influencer l'état de fonctionnement d'un coupleur hydrodynamique (5) avec un système d'alimentation en lubrifiant ou en fluide de travail (4) associé à celui-ci, comprenant au moins une source de fluide de travail (6), un organe de refroidissement (11), le coupleur hydrodynamique (5) comprenant au moins deux roues à pales formant entre elles une enceinte de travail de forme torique et une conduite d'admission (30) et une conduite d'évacuation (32) ;
6.1 avec un organe de commande (8) avec au moins une entrée pour une grandeur caractérisant du moins indirectement l'état de fonctionnement de consigne et une pluralité de sorties ;
6.2 les sorties sont couplées à des moyens destinés à influencer les conduites d'admission et d'évacuation (30, 32) du coupleur hydrodynamique ;
6.3 d'autres moyens destinés à influencer l'alimentation en fluide de travail à partir d'une source (6) et à réaliser la circulation de fluide de travail dans un circuit fermé à partir du coupleur hydrodynamique (5) sont prévus ;
6.4 l'organe de commande (8) comprend une balance manométrique (10) ;
6.5 la balance manométrique (10) comporte au moins un trou de contrôle (57) ;
6.6 le trou de contrôle (57) est relié du moins indirectement au moins aux raccords suivants :
- conduite d'admission (30) du coupleur hydrodynamique (5)
- conduite d'évacuation (32) du coupleur hydrodynamique (5)
- source (6) d'alimentation en fluide de travail
6.7 la balance manométrique (10) comporte en outre au moins un piston de commande (49) apte à être guidé dans le trou de contrôle (57) tout en libérant et verrouillant partiellement le couplage avec les raccords, une pression du moins proportionnelle à la grandeur caractérisant du moins indirectement l'état de fonctionnement de consigne et une force contraire **caractérisée par** la pression dans la conduite d'évacuation (32) du coupleur hydrodynamique (5) étant aptes à être appliquées à ce piston, un équilibre de forces étant obtenu par déplacement du piston de commande (49).

7. Dispositif de commande selon la revendication 6, **caractérisé en ce que** le trou de contrôle (57) est relié aux raccords suivants pour des conduits (18, 14) d'un circuit hydrodynamique fermé (33) associé à l'enceinte de travail du coupleur hydrodynamique (5).

8. Dispositif de commande selon l'une quelconque des revendications 6 ou 7, **caractérisé par** les particularités suivantes :
8.1 les sorties sont formées par les raccords pour conduits (20, 19, 14, 16) ;
8.2 les moyens destinés à influencer les conduites d'admission et d'évacuation (30, 32) du coupleur hydrodynamique (5) sont formés par la balance manométrique (10).

9. Dispositif de commande selon l'une quelconque des revendications 6 à 8, **caractérisé en ce que** l'entrée de la balance manométrique (10) pour une grandeur décrivant du moins indirectement l'état de fonctionnement du coupleur hydrodynamique (5) est formé par un raccord hydraulique destiné à exercer une pression sur une surface du piston de commande (57).

10. Dispositif de commande selon la revendication 9, **caractérisé en ce que** l'entrée de la balance manométrique (10) est couplée à une valve proportionnelle (70) faisant office d'organe destiné à imposer un état de fonctionnement de consigne.

11. Dispositif de commande selon l'une quelconque des revendications 6 à 8, **caractérisé en ce qu'**une force apte à être produite électromagnétiquement est destinée à être appliquée sur le piston de commande (49) en vue d'imposer l'état de fonctionnement de consigne.

12. Dispositif de commande selon l'une quelconque des revendications 6 à 8, **caractérisé en ce qu'**une force apte à être produite mécaniquement est destinée à être appliquée sur le piston de commande (49) en vue d'imposer l'état de fonctionnement de consigne.

13. Dispositif de commande selon l'une quelconque des revendications 5 à 12, **caractérisé en ce que** le piston de commande (49) comprend au moins deux parties d'élément (49.1, 49.2) qui sont aptes à être solidarisées l'une à l'autre de façon fixe.

14. Dispositif de commande selon l'une quelconque des revendications 6 à 13, **caractérisé par** les particularités suivantes :
14.1 le coupleur hydrodynamique (5) fait partie constitutive d'une unité de démarrage comprenant un embrayage de pontage ;
14.2 le système d'alimentation en lubrifiant ou en fluide de travail (4) associé au coupleur hydrodynamique (5) est également associé à l'embrayage de pontage ;
14.3 les sorties de l'organe de commande (8) sont couplées à des moyens destinés à influencer les conduites (15) du système d'alimentation en lubrifiant (9) de l'unité de démarrage (100).

15. Dispositif de commande selon l'une quelconque des revendications 6 à 14, **caractérisé en ce que** le trou de contrôle (57) est couplé à une conduite d'alimentation en lubrifiant (15).

16. Dispositif de commande selon la revendication 15, **caractérisé en ce qu'**au moins un régulateur de débit (VLB) est prévu dans le trou de contrôle (57) entre les raccords de la conduite d'alimentation en lubrifiant (15) et la conduite d'admission (30) du coupleur hydrodynamique (5) pour réaliser une alimentation continue en lubrifiant.

17. Dispositif de commande selon la revendication 15, **caractérisé en ce qu'**au moins deux systèmes de valve (VLB1, VLB2) aptes à être actionnés en fonction de la pression sont prévus dans le trou de contrôle (57) pour réaliser une alimentation continue en lubrifiant, le couplage entre la source (6) d'alimentation en fluide de travail et la conduite d'admission (30) du coupleur hydrodynamique (5) se faisant par un premier système de valve (VLB1) et le couplage entre la source (6) d'alimentation en fluide de travail et le système d'alimentation en lubrifiant (9) de l'unité de démarrage (100) se faisant par le deuxième système de valve (VLB2).

18. Dispositif de commande selon l'une quelconque des revendications 6 à 17, pour un système d'entraînement avec un système de réservoir (27), **caractérisé par** les particularités suivantes :
18.1 la balance manométrique (10) comporte un raccord pour un conduit (19) qui est relié au système de réservoir et qui est apte à être couplé à la conduite d'admission (30) du couplage hydrodynamique (5) par déplacement du piston de commande (57) ;
18.2 un système de valve (R2) destiné à empêcher le reflux de fluide de travail depuis le composant hydrodynamique est associé au conduit de raccordement (19).

19. Dispositif de commande selon la revendication 18, **caractérisé par** les particularités suivantes :
19.1 le système de réservoir (27) est relié à la conduite d'alimentation en lubrifiant (15), des moyens destinés à empêcher la quantité de lubrifiant stockée dans le réservoir de passer dans la conduite d'alimentation en lubrifiant (15) étant prévus dans la conduite de liaison ;
19.2 les moyens comprennent deux systèmes de valves anti-retour (R1, R5).

20. Dispositif de commande selon la revendication 19, **caractérisé en ce que** le système de valve (R2) et les systèmes de valve anti-retour (R1, R5) sont disposés dans le trou de contrôle (57) de la balance manométrique (10).

21. Dispositif de commande selon l'une quelconque des revendications 17 ou 19, **caractérisé en ce que** les deux systèmes de valve (VLB1, VLB2) aptes à être actionnés en fonction de la pression et destinés à réaliser une alimentation continue en lubrifiant, les systèmes de valve anti-retour (R1, R5) aptes à être disposés dans le trou de contrôle (57) et le système de valve (R2) sont regroupés en un ensemble de valves.
